# EUROPÄISCHE PATENTSCHRIFT

(11) **EP 0 627 163 B1**
(45) Veröffentlichungstag und Bekanntmachung des Hinweises auf die Patenterteilung: **14.08.1996**
(21) Anmeldenummer: 94107846.1
(22) Anmeldetag: 20.05.1994
(51) Int. Cl.: A01N 43/30

(54) **Fungizide Wirkstoffkombinationen**
Fungicidally active agent combinations
Combinaisons d'agents actifs fongicides

(30) Priorität: 02.06.1993 DE 4318285
(43) Veröffentlichungstag der Anmeldung: 07.12.1994
(73) Patentinhaber: BAYER AG, 51368 Leverkusen (DE)
(72) Erfinder: Dutzmann, Stefan, Dr., D-40721 Hilden (DE); Dehne, Heinz-Wilhelm, 53125 Bonn (DE); Kuck, Karl-Heinz Dr., D-40764 Langenfeld (DE); Brandes, Wilhelm Dr., D-42799 Leichlingen (DE); Krämer, Wolfgang Dr., D-51399 Burscheid (DE)

(56) Entgegenhaltungen:
- EP-A- 0 167 768
- EP-A- 0 281 842
- DE-A- 3 719 326

## Beschreibung

Die vorliegende Erfindung betrifft neue Wirkstoffkombinationen, die aus dem bekannten 8-^{t}Butyl-2-(N-ethyl-N-n-propylamino)-methyl-1,4-dioxaspiro[4,5]decan einerseits und weiteren bekannten fungiziden Wirkstoffen andererseits bestehen und sehr gut zur Bekämpfung von Pilzen geeignet sind.

Es ist bereits bekannt, daβ 8-^{t}Butyl-2-(N-ethyl-N-n-propylamino)-methyl-1,4-dioxaspiro[4,5]decan fungizide Eigenschaften besitzt (vgl. EP-OS 0 281 842). Die Wirksamkeit dieses Stoffes ist gut; sie läßt jedoch bei niedrigen Aufwandmengen in manchen Fällen zu wünschen übrig.

Ferner ist schon bekannt, daß zahlreiche Azol-Derivate, Arylbenzylether, Benzamide, Morpholin-Verbindungen und andere Heterocyclen zur Bekämpfung von Pilzen eingesetzt werden können (vgl. K.H. Büchel "Pflanzenschutz und Schädlingsbekämpfung", Seiten 140-153, Georg Thieme-Verlag, Stuttgart 1977, EP-OS 0 040 345, DE-OS 2 324 010, DE-OS 2 201 063, EP-OS 0 112 284, EP-OS 0 304 758 und DD-PS 140 412).

Ferner sind bekannt fungizide Wirkstoffkombinationen aus 8-^{t}Butyl-2-(3,5-dimethylpiperidin-1-yl-methyl)-1,4-dioxaspiro[4,5]decan und anderen bekannten fungiziden Wirkstoffen (vgl. DE-OS 37 19 326).

Die Wirksamkeit der bekannten fungiziden Wirkstoffe als Einzelverbindungen, ebenso wie die der bekannten synergistischen Wirkstoffkombinationen ist jedoch, insbesondere bei niedrigen Aufwandmengen, nicht immer in allen Anwendungsbereichen völlig zufriedenstellend.

Es wurde nun gefunden, daß die neuen Wirkstoffkombinationen aus 8-^{t}Butyl-2-(N-ethyl-N-n-propylamino)-methyl-1,4-dioxaspiro[4,5]decan der Formel (I) 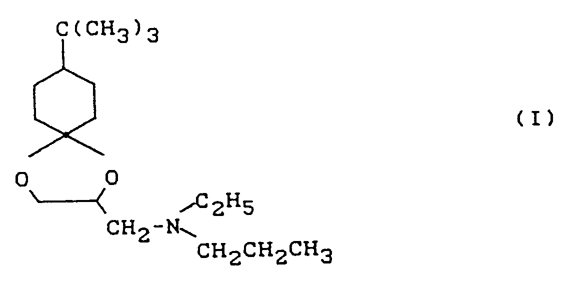
und mindestens
(1) einem Azol-Derivat der Formel 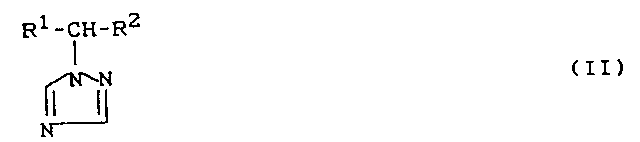 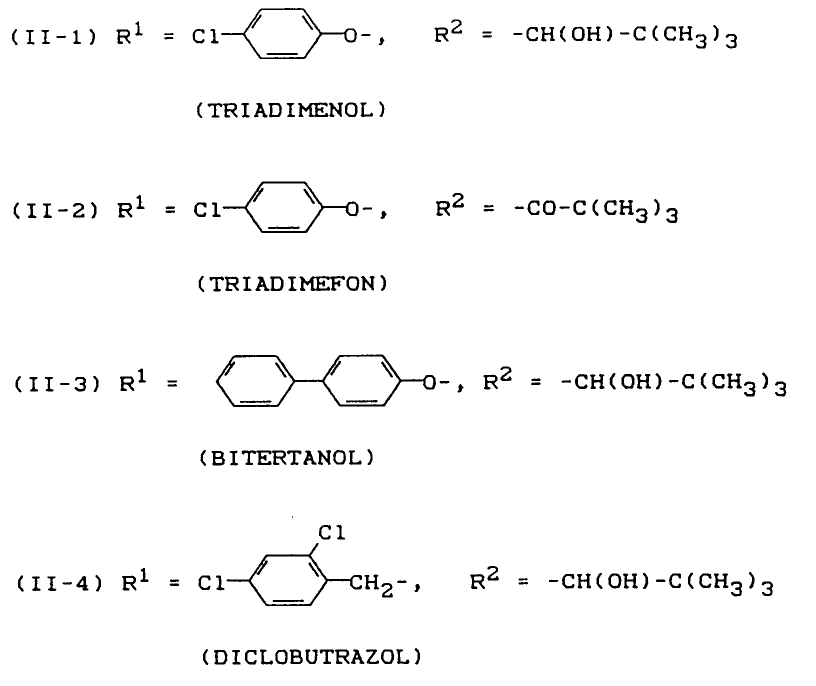 und/oder mindestens
(2) einem Azol-Derivat der Formel 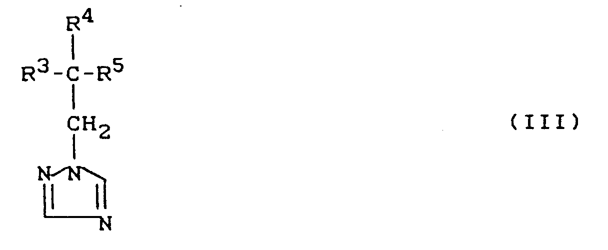 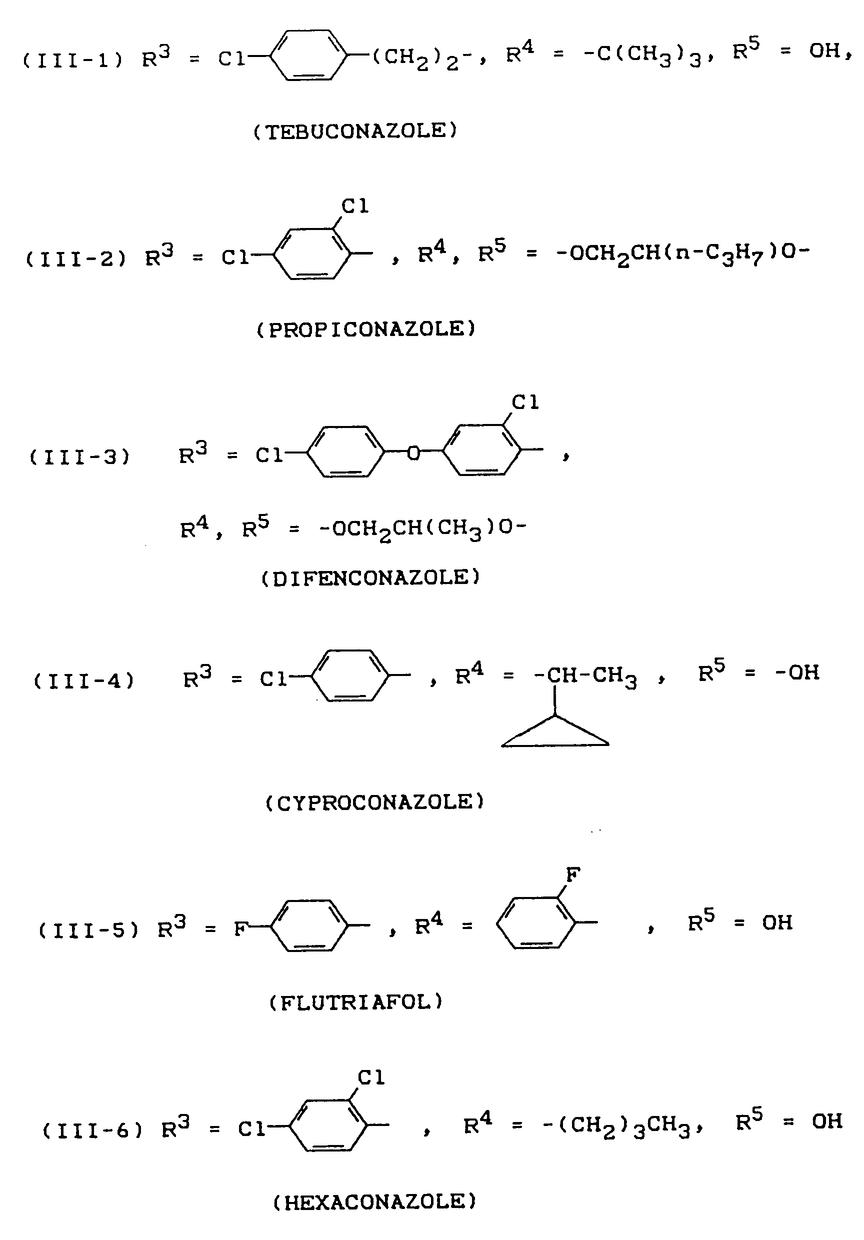 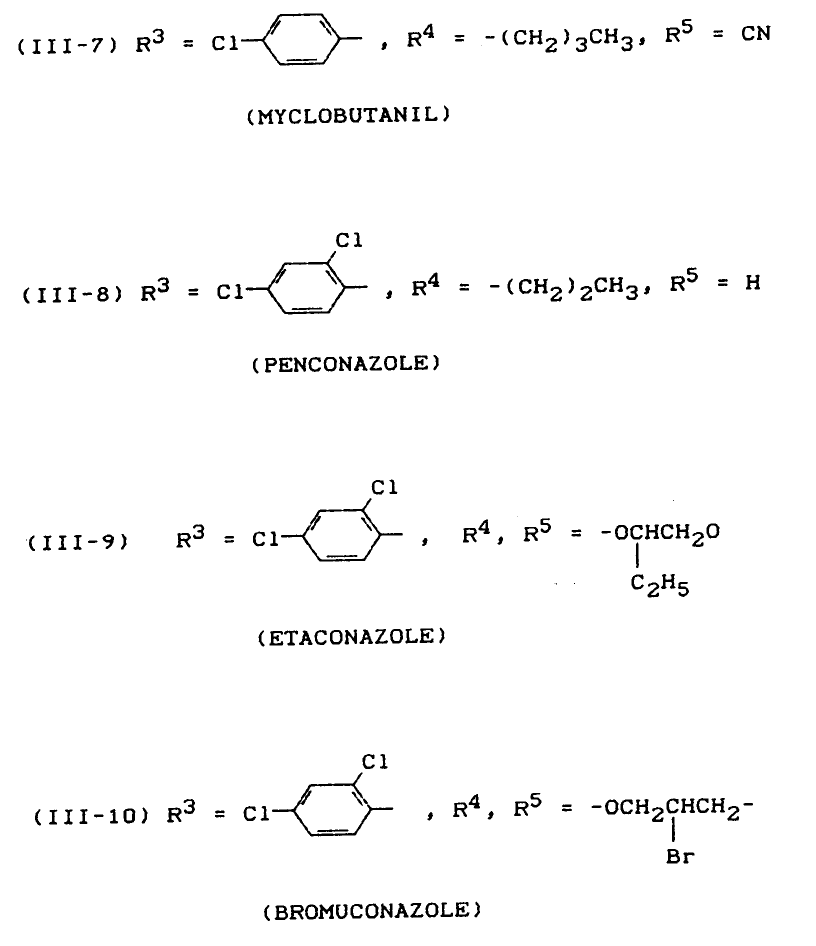 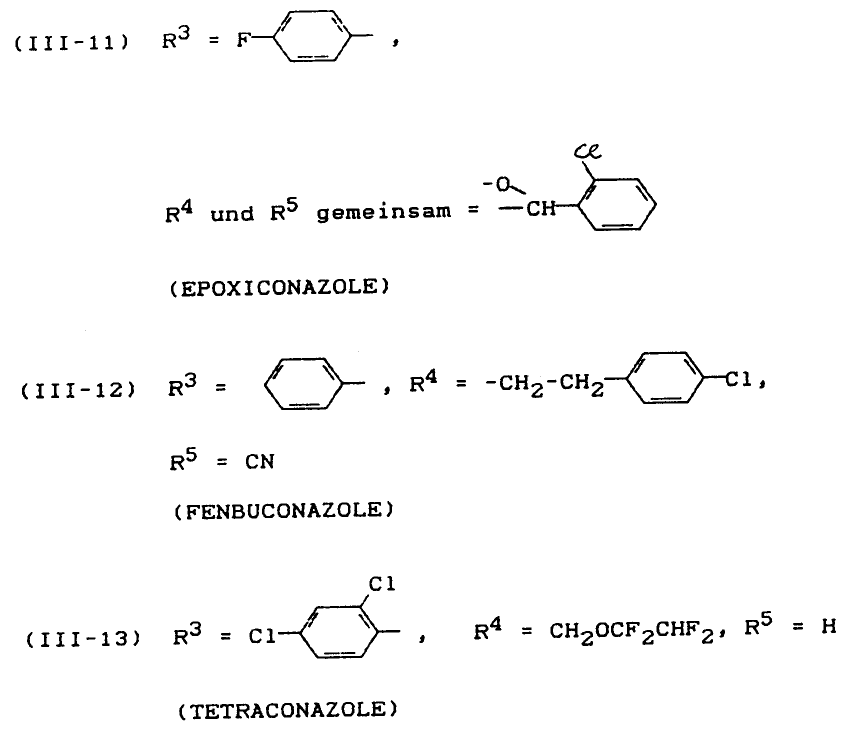 und/oder
(3) dem Azol-Derivat der Formel 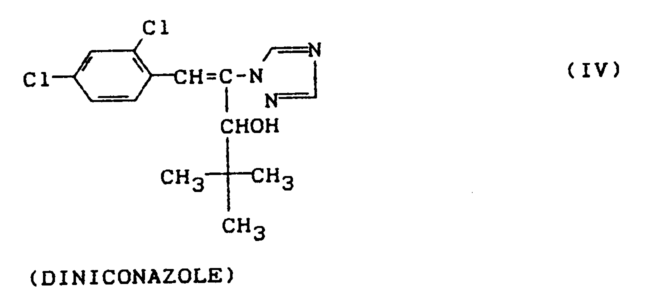 und/oder
(4) dem Azol-Derivat der Formel 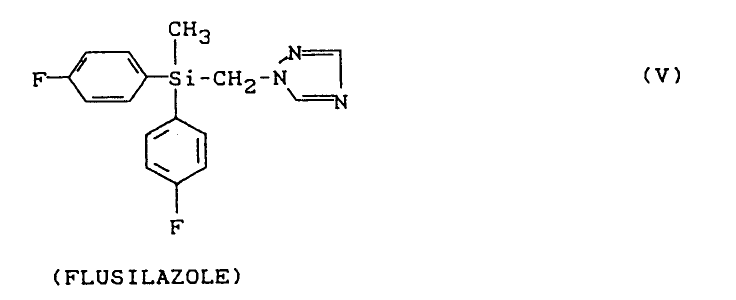 und/oder
(5) dem Azol-Derivat der Formel 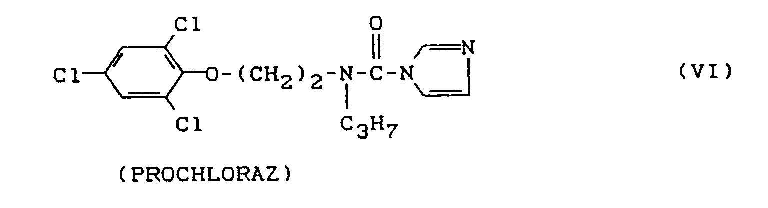 und/oder
(6) mindestens einem Azol-Derivat der Formel 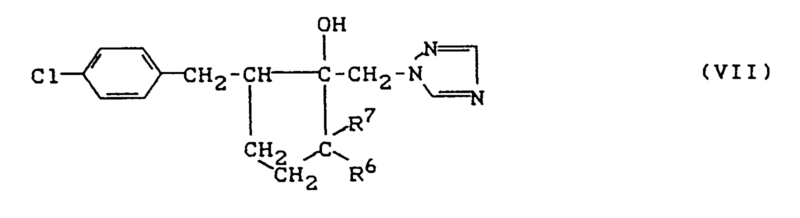 (VII-1) R⁶ = CH₃ , R⁷ = CH₃
   (METCONAZOLE)
   (VII-2) R⁶ = H, R⁷ = CH(CH₃)₂
   (IPCONAZOLE)
   und/oder
(7) dem Azol-Derivat der Formel 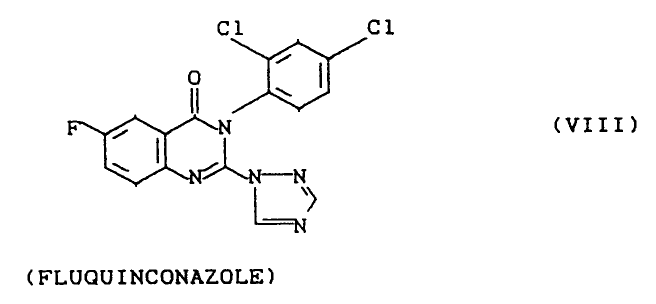 und/oder
(8) mindestens einem der Heterocyclen der Formel 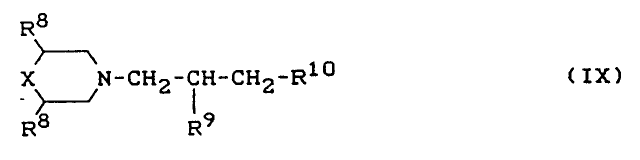 (IX-1) X = O, R⁸ = CH₃, R⁹ = H, R¹⁰ = C₁₀H₂₁
   (TRIDEMORPH)
   (IX-2) X = O, R⁸ = CH₃, R⁹ = H, R¹⁰ = C₉H₁₉
   (ALDIMORPH) 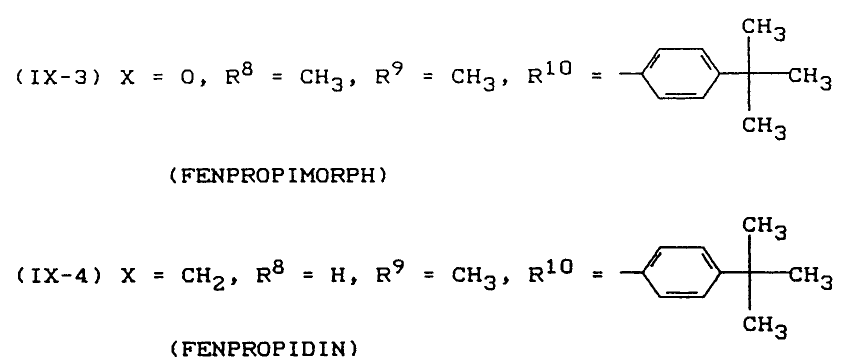 und/oder
(9) der Verbindung der Formel 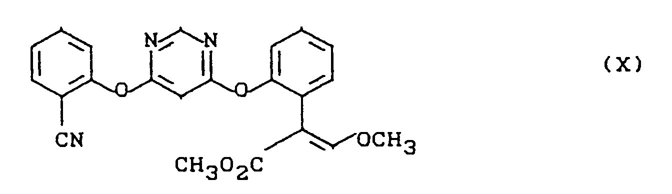 und/oder
(10) der Verbindung der Formel 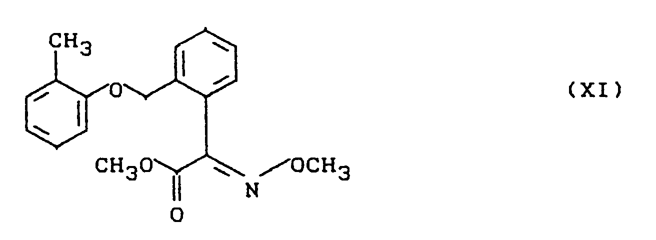 und/oder
(11) der Verbindung der Formel 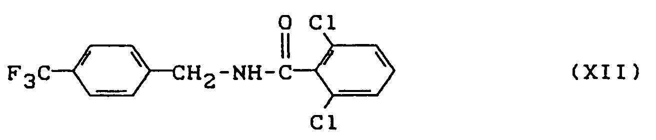 und/oder
(12) der Verbindung der Formel 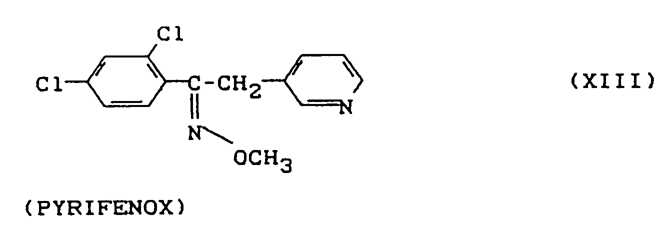 und/oder
(13) der Verbindung der Formel 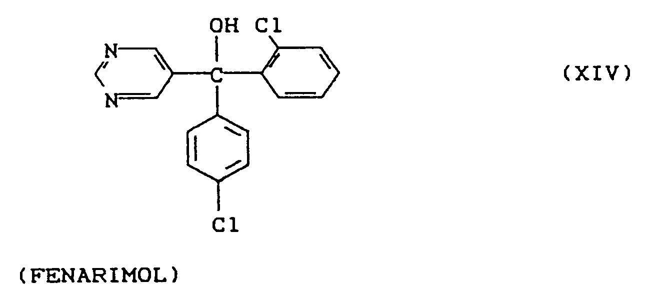 und/oder
(14) der Verbindung der Formel 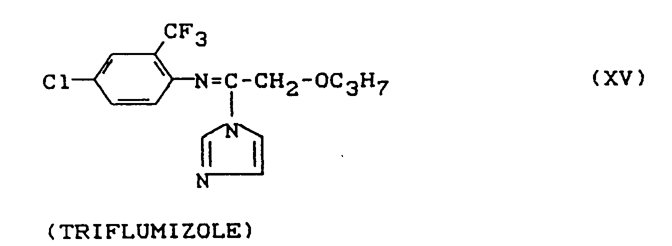 und/oder
(15) mindestens einer der Verbindungen der Formel 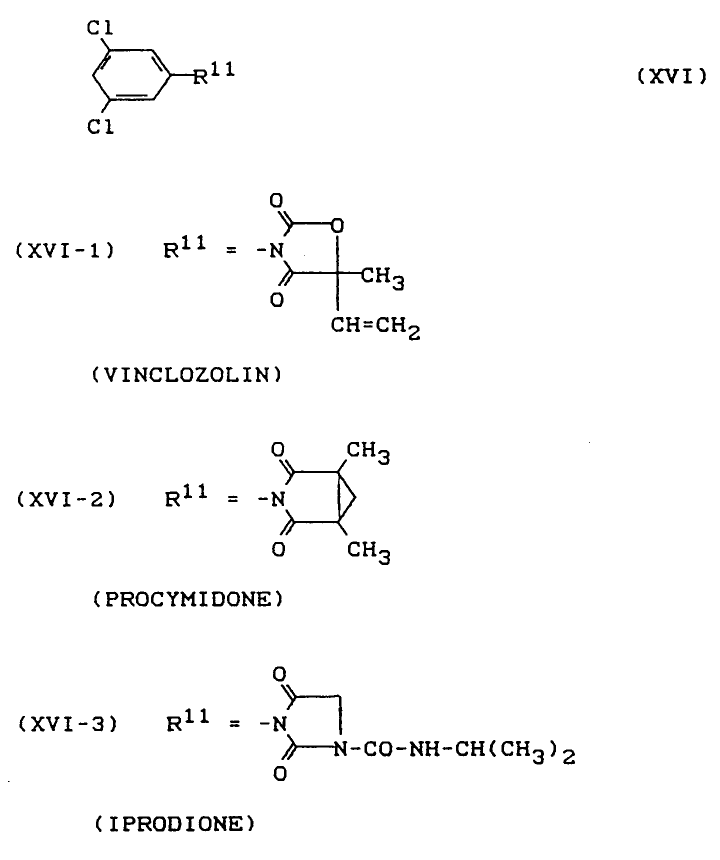 und/oder
(16) mindestens einer der Verbindungen der Formel 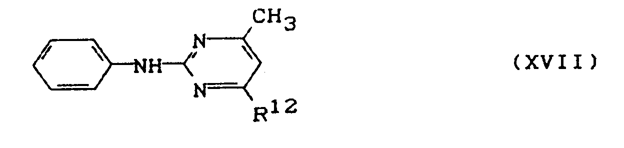 (XVII-1) R¹² = CH₃ (PYRIMETHANIL)
   (XVII-2) R¹² = C≡C-CH₃ (MEPANIPYRIM) 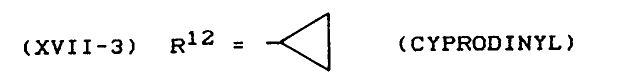 und/oder
(17) mindestens einer der Verbindungen der Formel 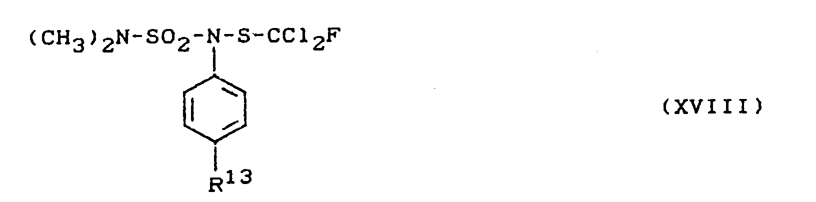 (XVIII-1) R¹³ = H
   (DICHLOFLUANID)
   (XVIII-2) R¹³ = CH₃
   (TOLYLFLUANID)
   und/oder
(18) der Verbindung der Formel 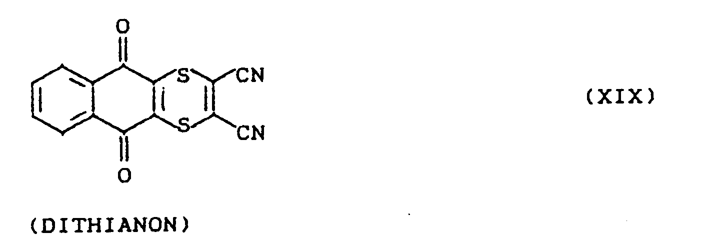 und/oder
(19) der Verbindung der Formel 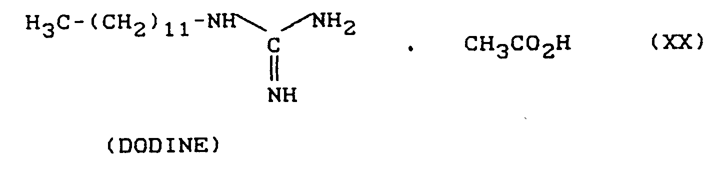 und/oder
(20) der Verbindung der Formel 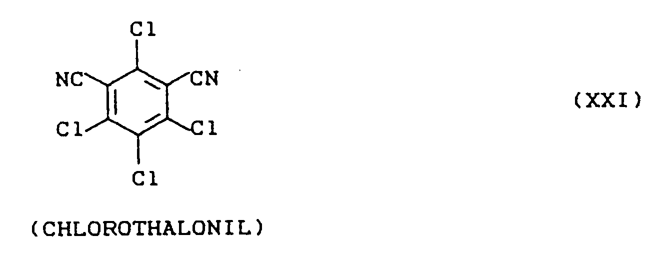 und/oder
(21) der Verbindung der Formel 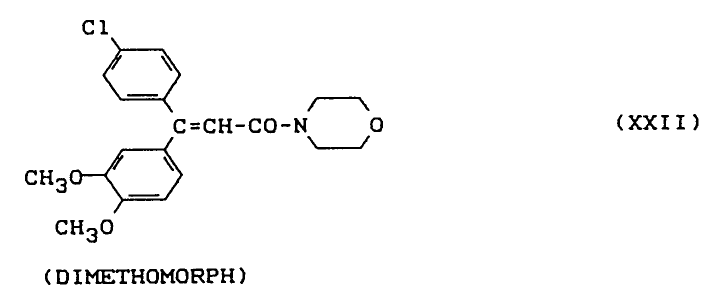 und/oder
(22) der Verbindung der Formel 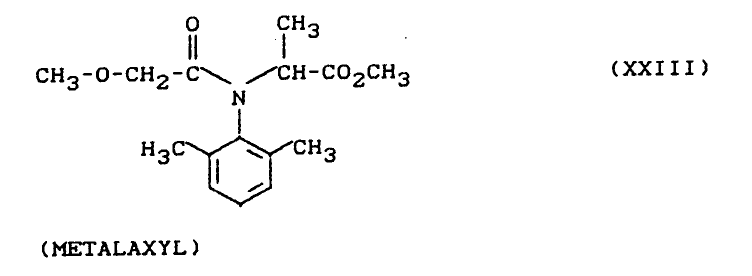 und/oder
(23) der Verbindung der Formel 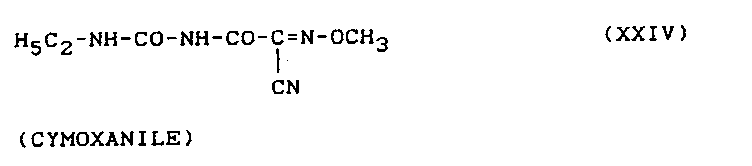 und/oder
(24) der Verbindung der Formel 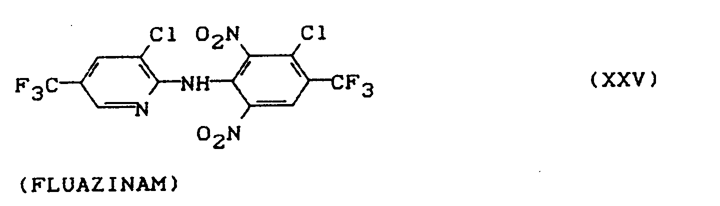 und/oder
(25) der Verbindung der Formel 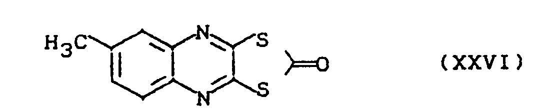 und/oder
(26) mindestens einer der Verbindungen der Formel

   Cl₃C-S-R¹⁴ (XXVII)

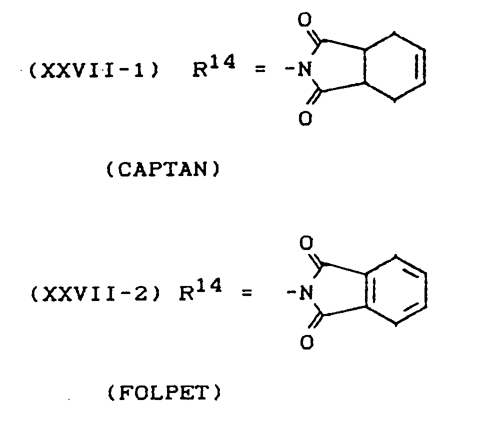

   und/oder
(27) mindestens einer Verbindung der Formeln

   3 Cu(OH)₂.CuCl₂.x H₂O (XXVIII-1)

   und 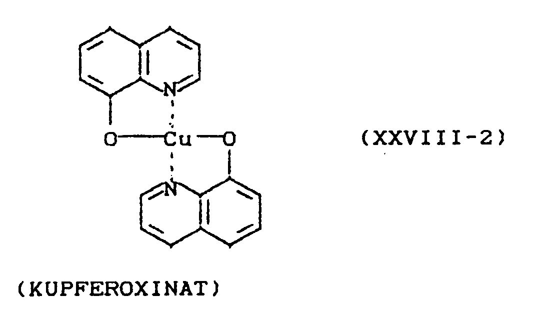 und/oder
(28) der Verbindung der Formel 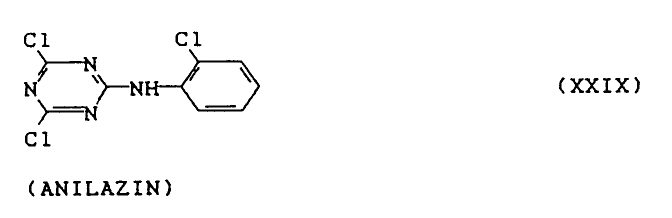 und/oder
(29) der Verbindung der Formel 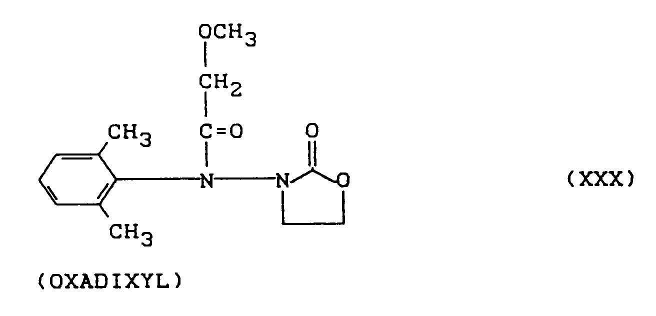 und/oder
(30) der Verbindung der Formel 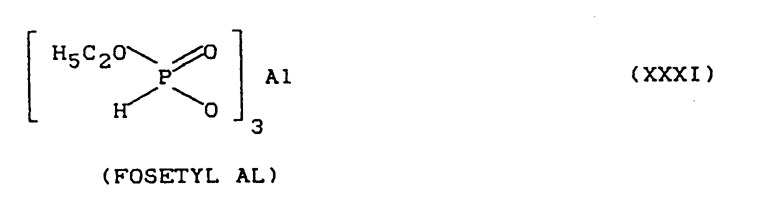 und/oder
(31) der Verbindung der Formel 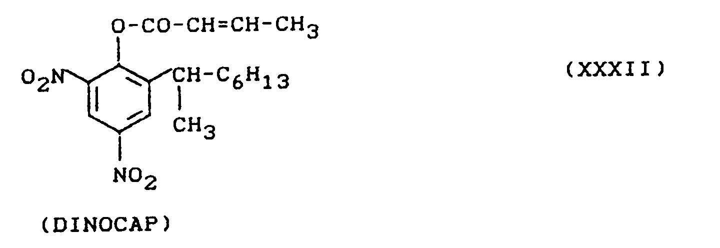 und/oder
(32) der Verbindung der Formel 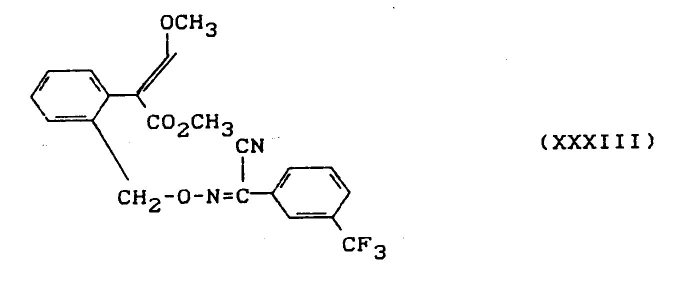 und/oder
(33) mindestens einer Verbindung der Formel 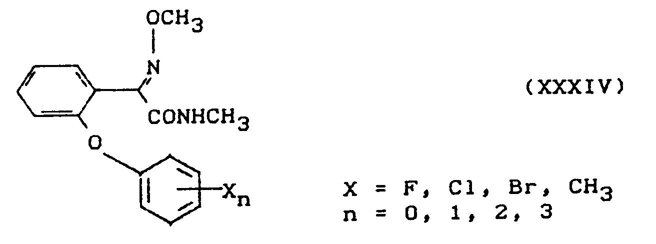 und/oder
(34) der Verbindung der Formel 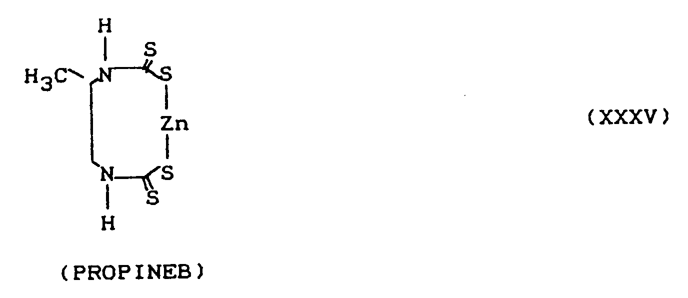 und/oder
(35) mindestens einer der Verbindungen der Formel 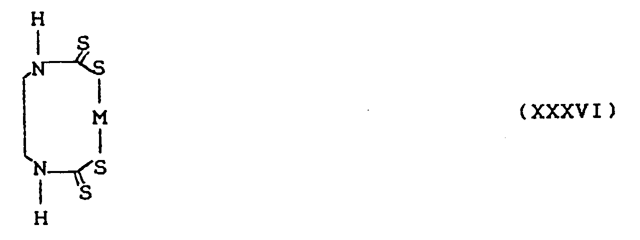 (XXXVI-1) M = Zn
   (ZINEB)
   (XXXVI-2) M = Mn
   (MANEB)
   (XXXVI-3) = Mischung aus (XXXVI-1) und (XXXVI-2)
   (MANCOZEB)
   und/oder
(36) mindestens einer Verbindung der Formel 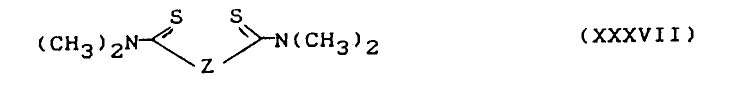 (XXXVII-1) Z = -S-S- (THIRAM)
   (XXXVII-2) Z = -S-Zn-S- (ZIRAM)
   und/oder
(37) der Verbindung der Formel 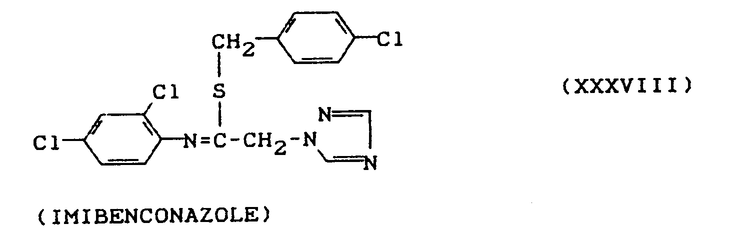 und/oder
(38) der Verbindung der Formel 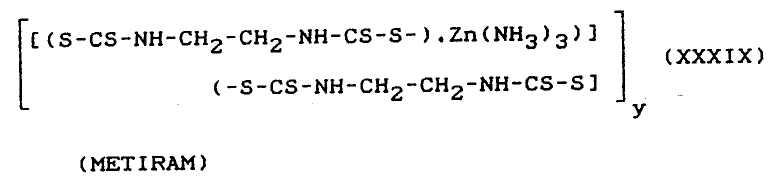 und/oder
(39) der Verbindung der Formel 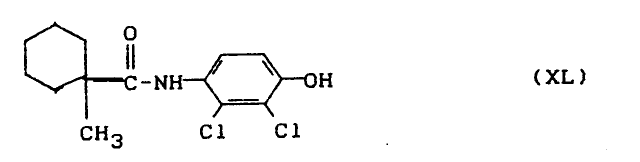 und/oder
(40) der Verbindung der Formel 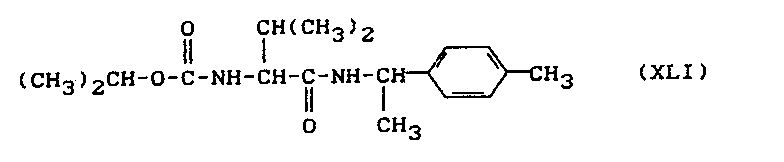 und/oder
(41) einer Verbindung der Formel

   Sₓ (XLII)

   (NETZSCHWEFEL)
   und/oder
(42) mindestens einer der Verbindungen der Formel 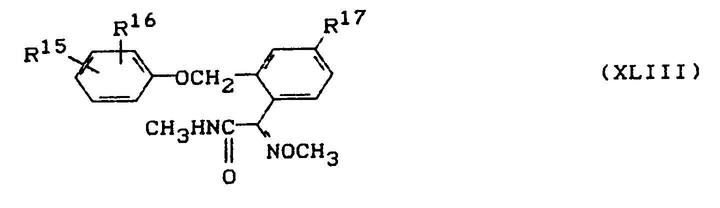 in welcher
   - R¹⁵ und R¹⁶: unabhängig voneinander für Wasserstoff, Halogen, Methyl oder Phenyl stehen und
   - R¹⁷: für Wasserstoff oder Methyl steht,
   sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe und auch wesentlich höher als die Wirkungen der bekannten Wirkstoffkombinationen. Es liegt also ein nicht vorhersehbarer synergistischer Effekt vor und nicht nur eine Wirkungsergänzung.

Das 8-^{t}Butyl-2-(N-ethyl-N-n-propylamino)-methyl-1,4-dioxaspiro[4,5]decan der Formel (I) und dessen Einsatz als Fungizid sind bekannt (vgl. EP-OS 0 281 842).

Die in den erfindungsgemäßen Wirkstoffkombinationen außerdem vorhandenen fungiziden Komponenten sind ebenfalls bekannt. Im einzelnen werden die Wirkstoffe in folgenden Publikationen beschrieben:
(1) Verbindungen der Formel (II)
   DE-OS 2 201 063
   DE-OS 2 324 010
   DE-OS 2 737 489
(2) Verbindungen der Formel (III)
   DE-OS 3 018 866
   DE-OS 2 551 560
   EP 47 594
   DE 2 735 872
(3) Verbindung der Formel (IV)
   DE-OS 28 38 847
(4) Verbindung der Formel (V)
   EP 68 813
   US 4 496 551
(5) Verbindung der Formel (VI)
   DE-OS 2 429 523
   DE-OS 2 856 974
   US 4 108 411
(6) Verbindungen der Formel (VII)
   EP 329 397
(7) Verbindungen der Formel (VIII)
   EP 183 458
(8) Verbindungen der Formel (IX)
   DD 140 041
(9) Verbindung der Formel (X)
   EP 382 375
(10) Verbindung der Formel (XI)
   EP 515 901
(11) Verbindung der Formel (XII)
   EP 314 422
(12) Verbindung der Formel (XIII)
   EP 49 854
(13) Verbindung der Formel (XIV)
   DE-OS 1 770 288
   US 3 869 456
(14) Verbindung der Formel (XV)
   DE 2 814 041
(15) Verbindungen der Formel (XVI)
   DE 2 207 576
   US 3 903 090
   US 3 755 350
   US 3 823 240
(16) Verbindungen der Formel (XVII)
   EP 270 111 und EP 310 550
(21) Verbindung der Formel (XXII)
   EP 219 756
(37) Verbindung der Formel (XXXVIII)
   US 4 512 989
(42) Verbindungen der Formel (XLIII)
   EP 398 692

Verbindungen aus den Gruppen (17), (18), (19), (20), (25), (26), (27), (28), (31), (34), (35), (36) und (41) sind beispielsweise beschrieben in K.H. Büchel, "Pflanzenschutz und Schädlingsbekämpfung, Seiten 121-153, Georg Thieme-Verlag, Stuttgart, 1977.

Die erfindungsgemäßen Wirkstoffkombinationen enthalten neben dem Wirkstoff der Formel (I) mindestens einen Wirkstoff von den Verbindungen der Gruppen (1) bis (42). Sie können darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)
- 0,1 bis 10: Gewichtsteile, vorzugsweise
- 0,3 bis 3: Gewichtsteile an mindestens einem Wirkstoff aus den Gruppen (1) bis (42).

Die erfindungsgemäßen Wirkstoffkombinationen besitzen sehr gute fungizide Eigenschaften. Sie lassen sich vor allem zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Cochliobolus, Septoria, Pyrenophora und Leptosphaeria, und gegen Pilzbefall an Gemüse, Wein und Obst, beispielsweise gegen Venturia oder Podosphaera an Äpfeln, Uncinula an Reben oder Sphaerotheca an Gurken.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nicht-ionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfindungsgemäßen Wirkstoffkombinationen geht aus den nachfolgenden Beispielen hervor. Während die einzelnen Wirkstoffe oder die bekannten Wirkstoffkombinationen in der fungiziden Wirkung Schwächen aufweisen, geht aus den Tabellen der folgenden Beispiele eindeutig hervor, daß die gefundene Wirkung der erfindungsgemäßen Wirkstoffkombinationen größer ist als Summe der Wirkungen der einzelnen Wirkstoffe und auch größer als die Wirkungen der bekannten Wirkstoffkombinationen.

### Beispiel 1

### Erysiphe-Test (Weizen) / protektiv

- Lösungsmittel:: 100 Gewichtsteile Dimethylformamid
- Emulgator:: 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit Sporen von Erysiphe graminis f. sp. tritici bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

Wirkstoffe, Wirkstoffkonzentrationen und Versuchsergebnisse gehen aus der folgenden Tabelle hervor.

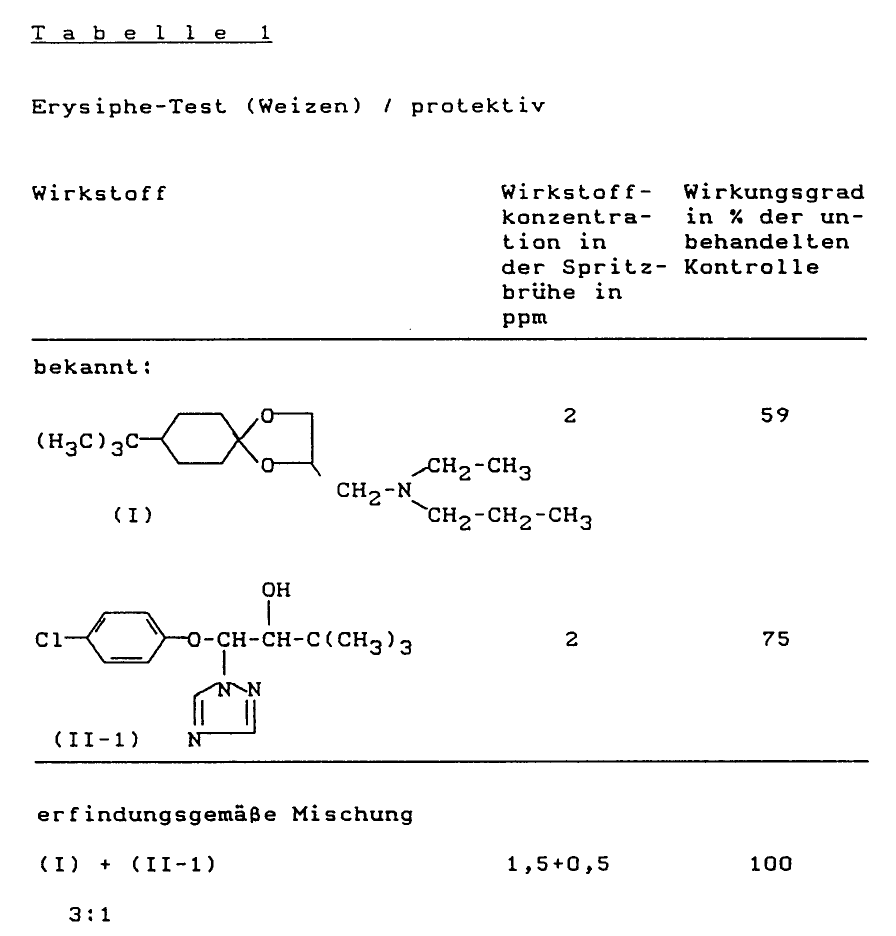

### Beispiel 2

### Erysiphe-Test (Gerste) / kurativ

- Lösungsmittel:: 10 Gewichtsteile N-Methyl-pyrrolidon
- Emulgator:: 0,6 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit Sporen von Erysiphe graminis f.sp. hordei bestäubt. 48 Stunden nach der Inokulation werden die Pflanzen mit der Wirkstoffzubereitung taufeucht besprüht.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

Wirkstoffe, Wirkstoffkonzentrationen und Versuchsergebnisse gehen aus der folgenden Tabelle hervor.

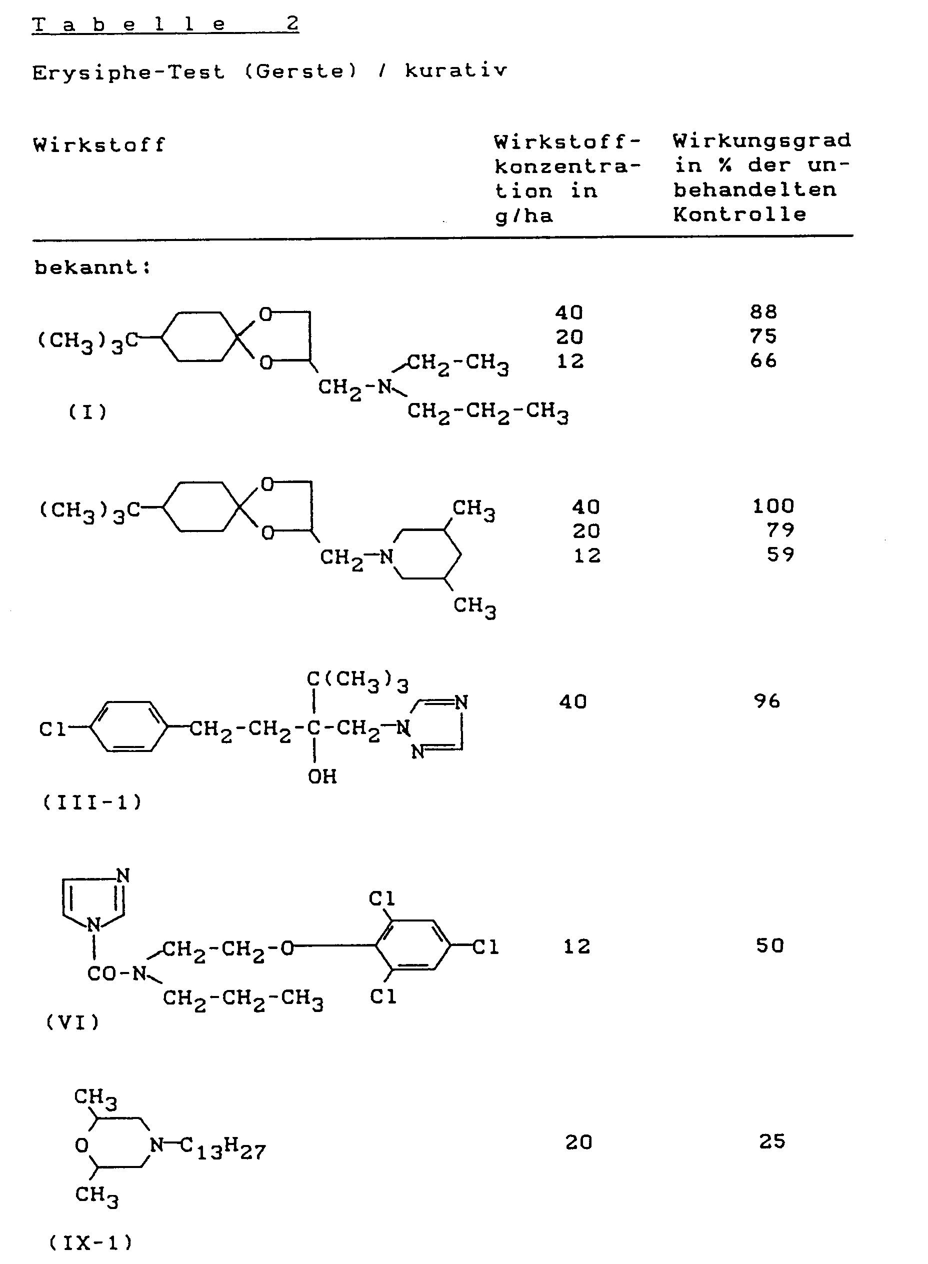

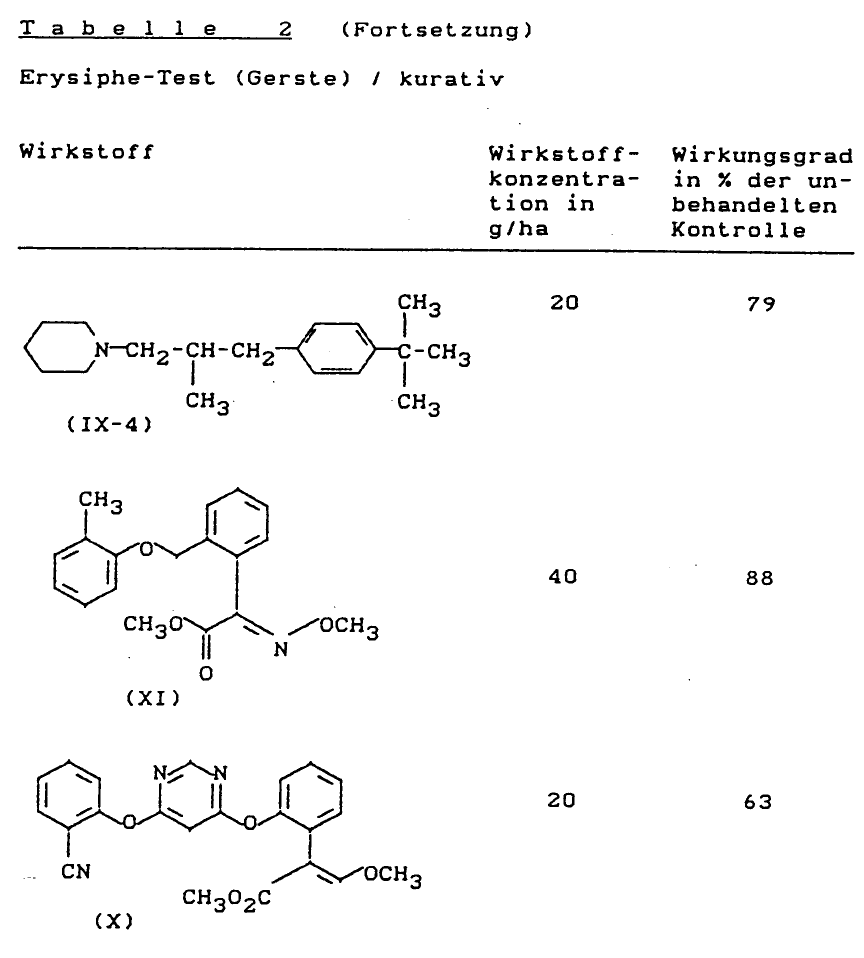

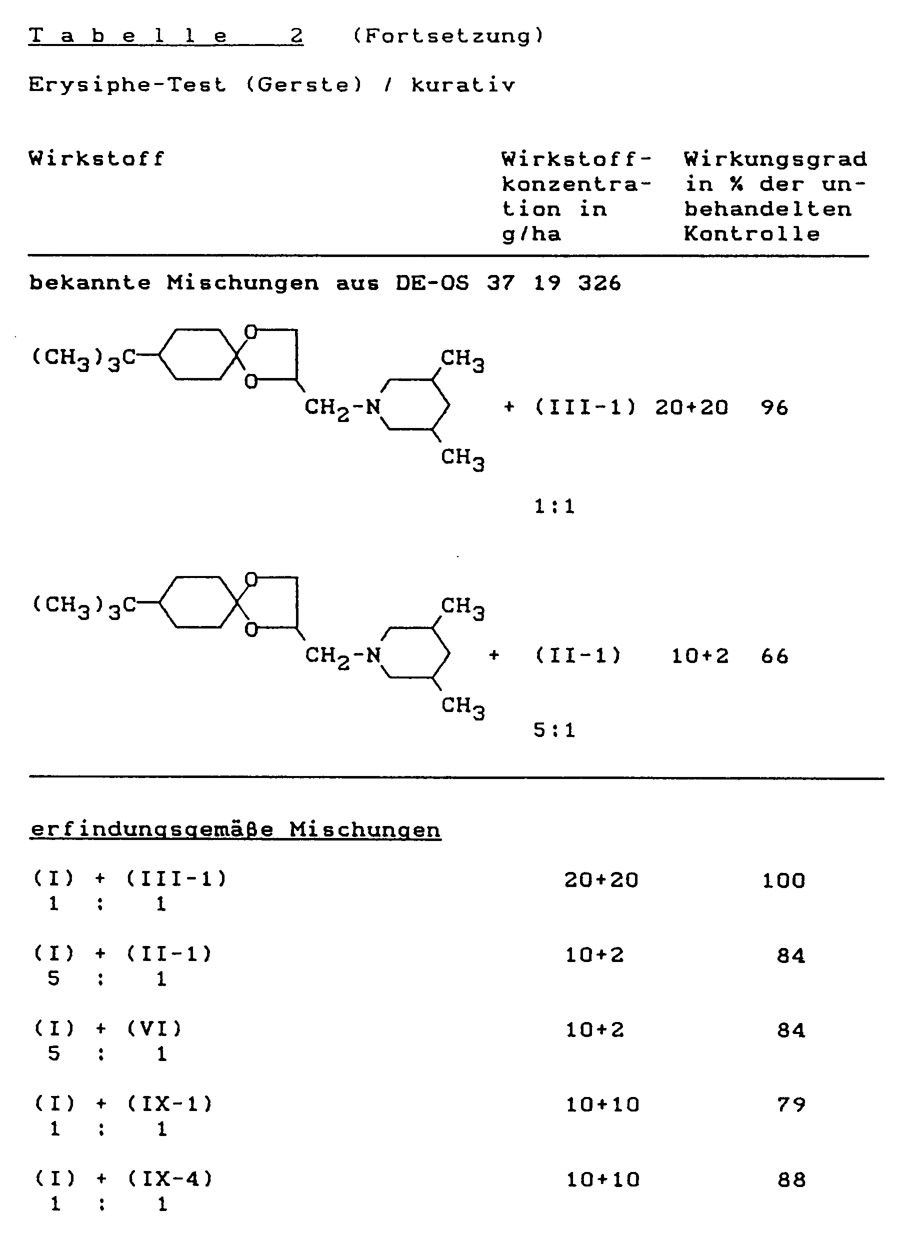

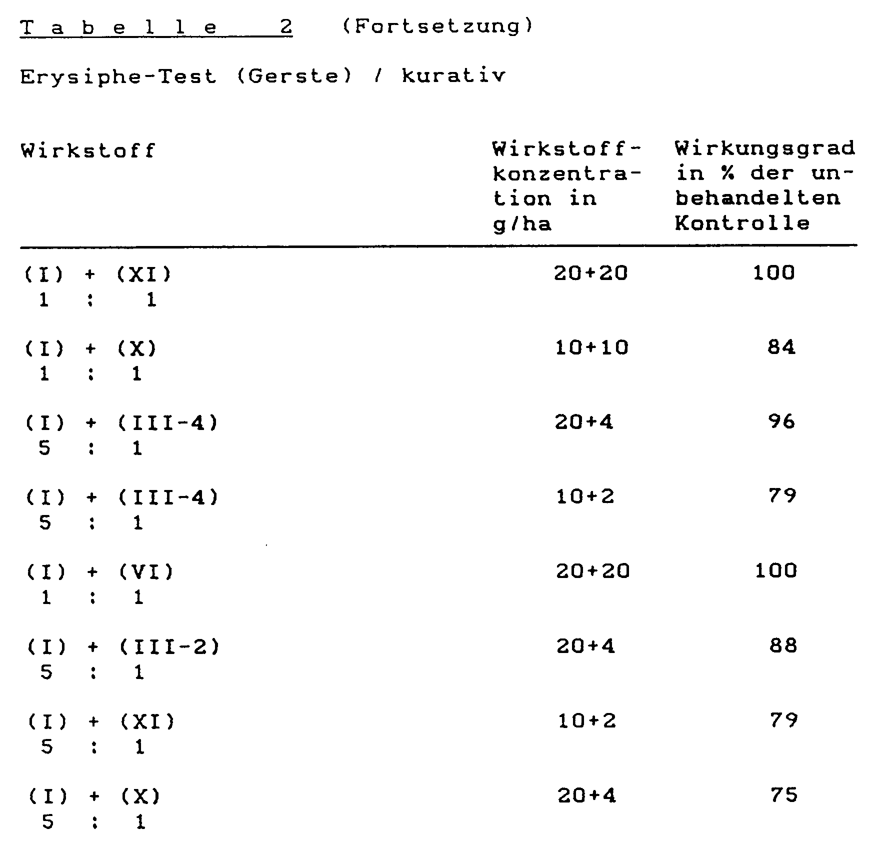

### Beispiel 3

### Erysiphe-Test (Weizen) / kurativ

- Lösungsmittel:: 10 Gewichtsteile N-Methyl-pyrrolidon
- Emulgator:: 0,6 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit Sporen von Erysiphe graminis f.sp. tritici bestäubt. 48 Stunden nach der Inokulation werden die Pflanzen mit der Wirkstoffzubereitung taufeucht besprüht.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

Wirkstoffe, Wirkstoffkonzentrationen und Versuchsergebnisse gehen aus der folgenden Tabelle hervor.

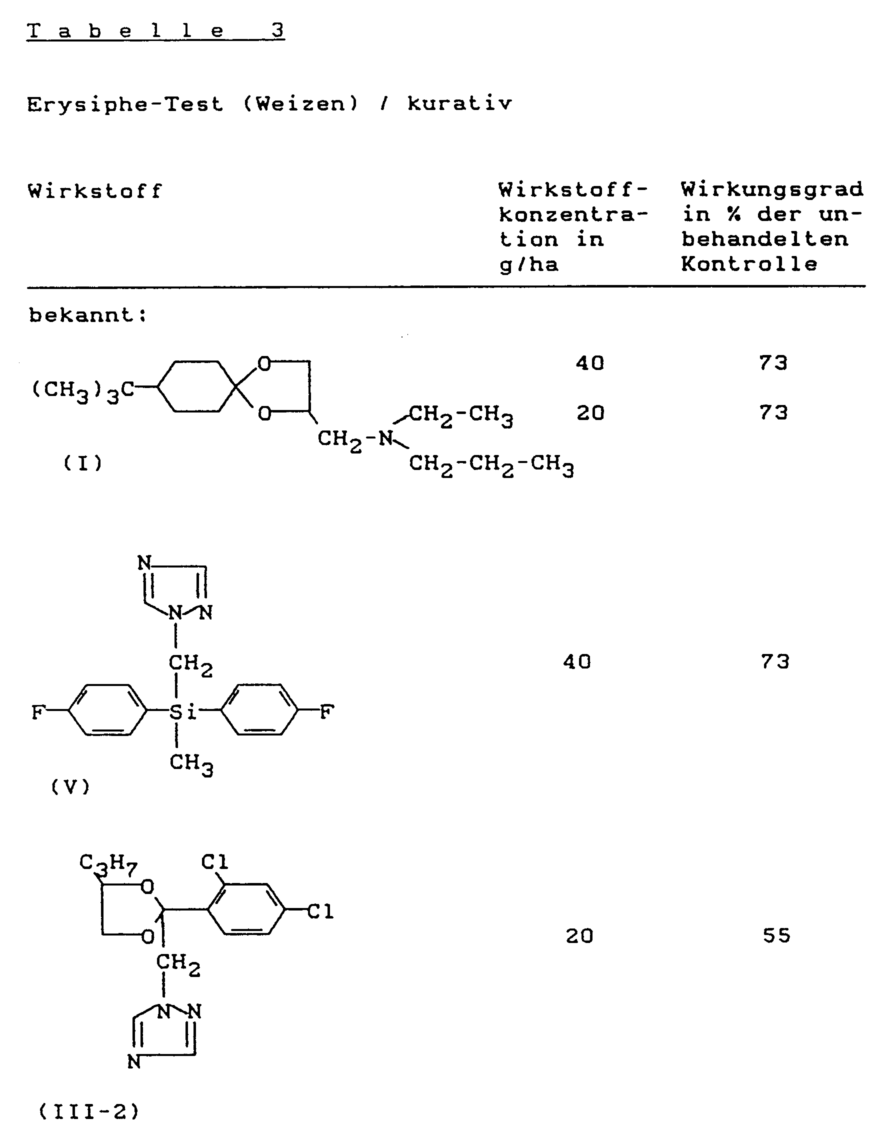

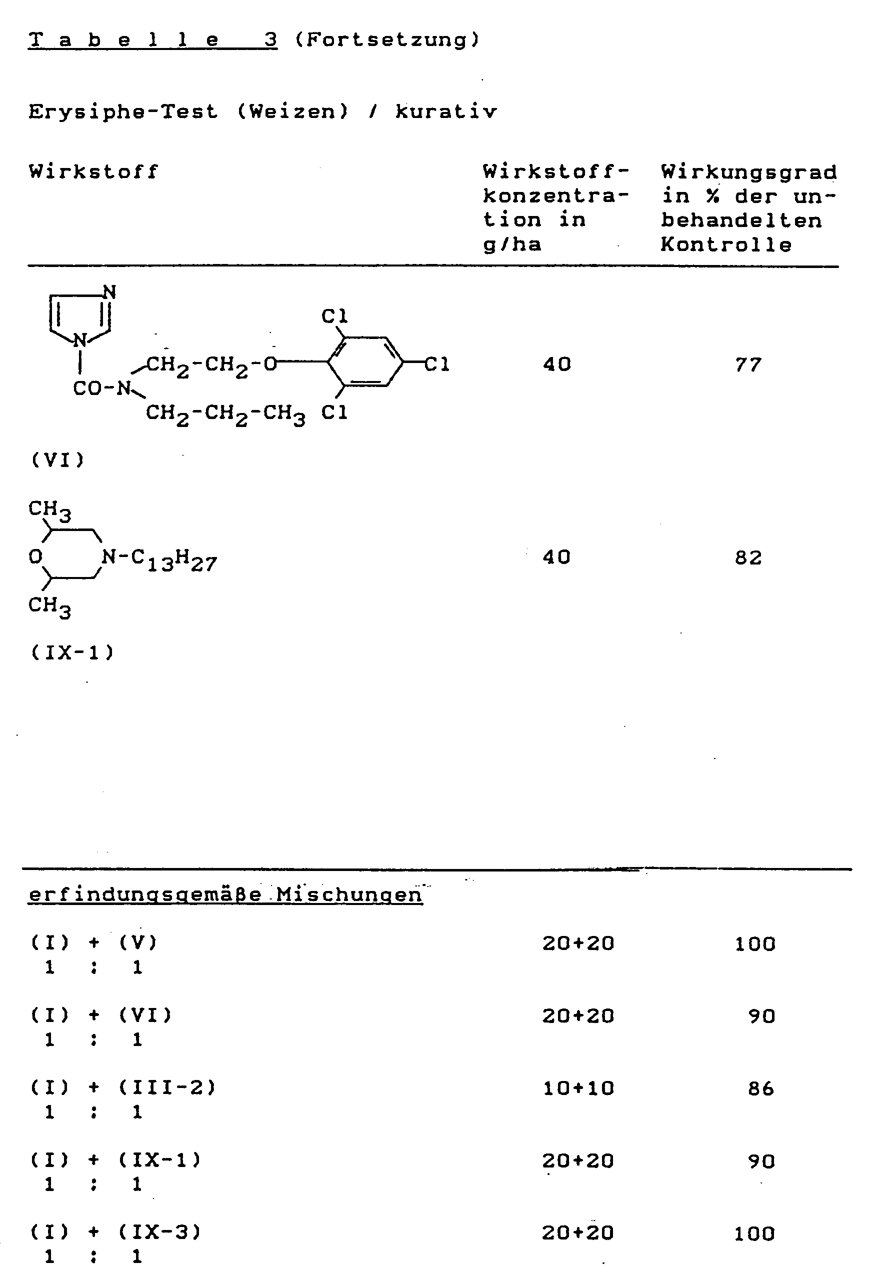

### Beispiel 4

### Erysiphe-Test (Weizen) / protektiv

- Lösungsmittel:: 10 Gewichtsteile N-Methyl-pyrrolidon
- Emulgator:: 0,6 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des des Spritzbelages werden die Pflanzen mit Sporen von Erysiphe graminis f.sp. tritici besträubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

Wirkstoffe, Wirkstoffkonzentrationen und Versuchsergebnisse gehen aus der folgenden Tabelle hervor.

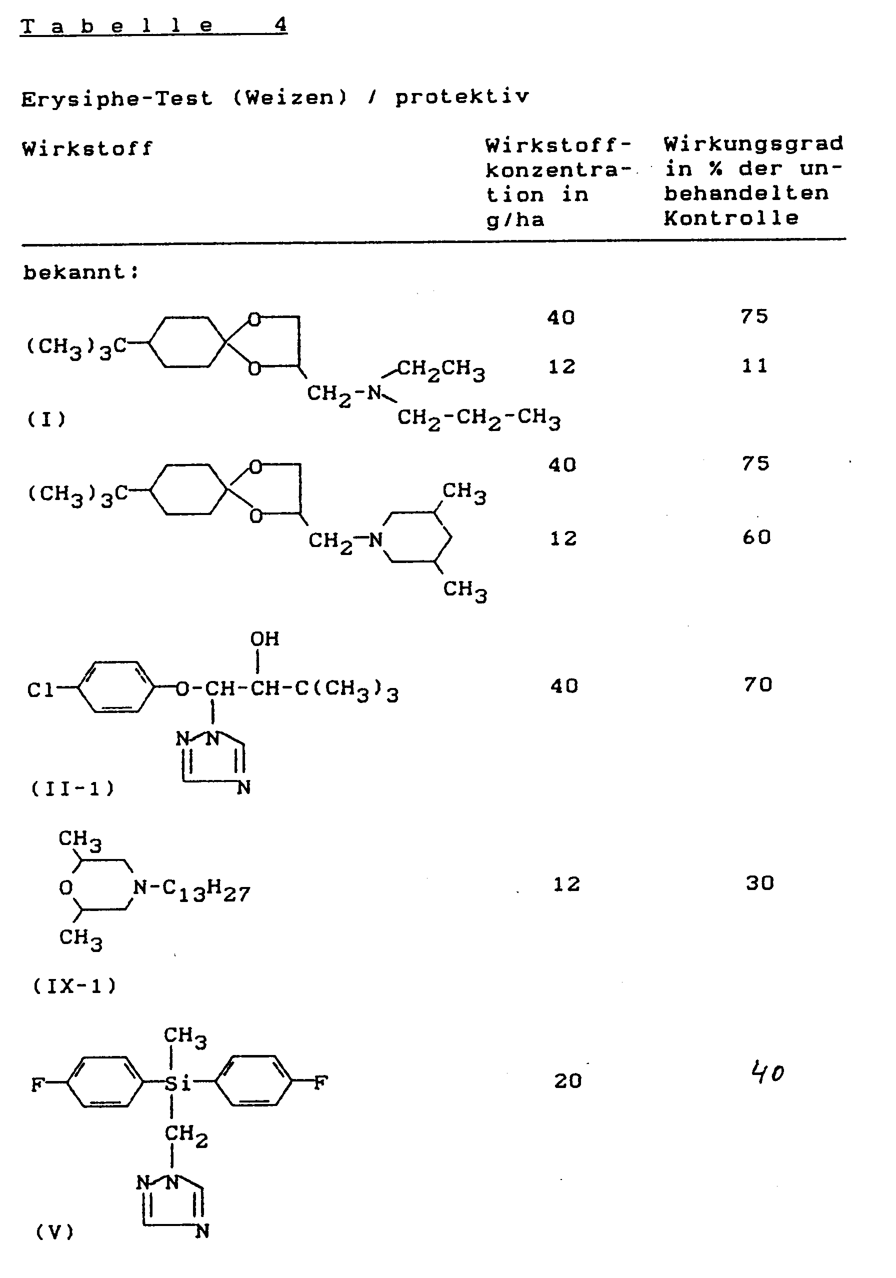

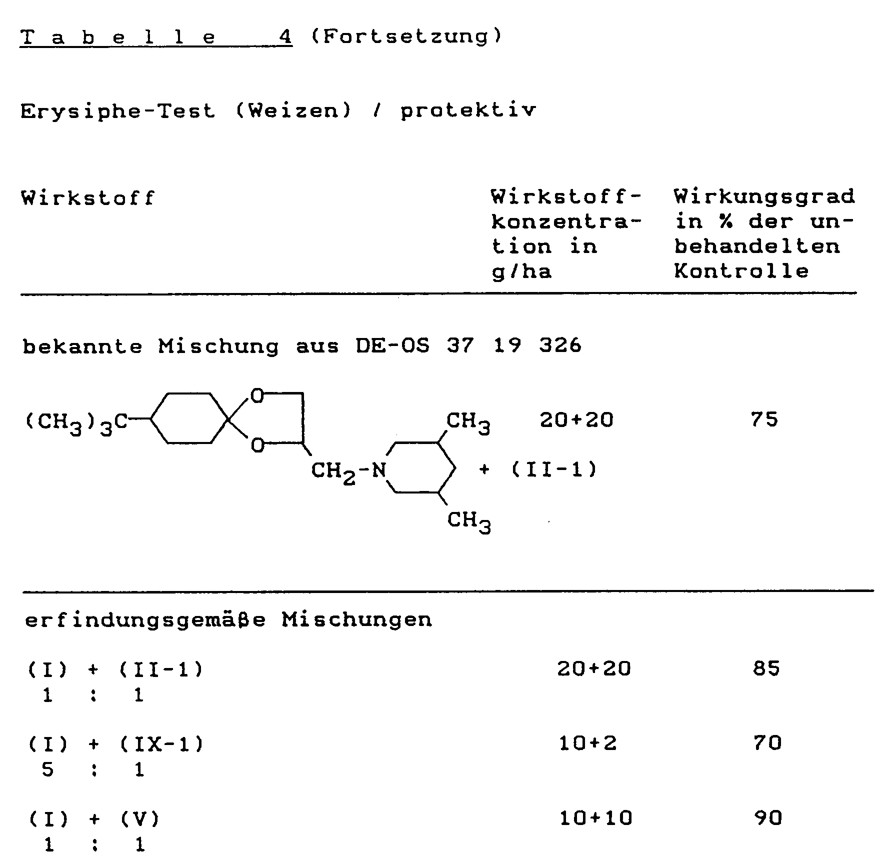

### Beispiel 5

### Podosphaera-Test (Apfel) / protektiv

- Lösungsmittel:: 4,7 Gew.-Teile Aceton
- Emulgator:: 0,3 Gew.-Teile Alkyl-Aryl-Polyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen durch Bestäuben mit Konidien des Apfelschorferregers Podosphaera leucotricha inokuliert.

Die Pflanzen werden dann im Gewächshaus bei 23°C und einer relativen Luftfeuchtigkeit von ca. 70 % aufgestellt.

10 Tage nach der Inokulation erfolgt die Auswertung.

Wirkstoffe, Wirkstoffkonzentrationen und Versuchsergebnisse gehen aus der folgenden Tabelle hervor.

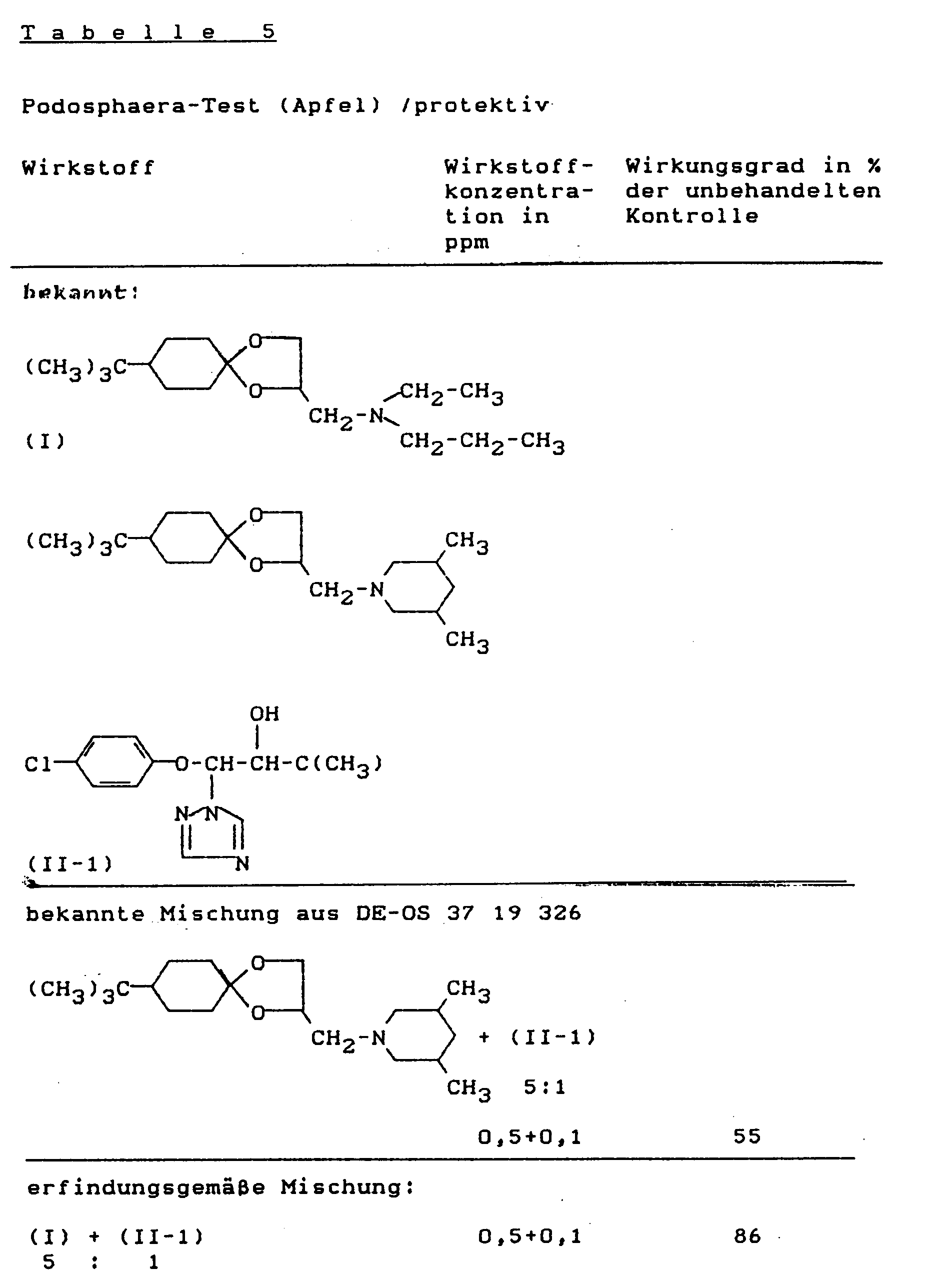

## Patentansprüche

1. Fungizide Mittel mit synergistischer Wirksamkeit, gekennzeichnet durch einen Gehalt an einer Wirkstoffkombination bestehend aus 8-^{t}Butyl-2-(N-ethyl-N-n-propylamino)-methyl-1,4-dioxaspiro[4,5]decan der Formel 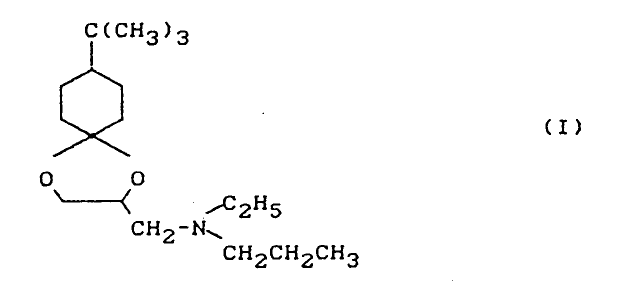 und mindestens
(1) einem Azol-Derivat der Formel 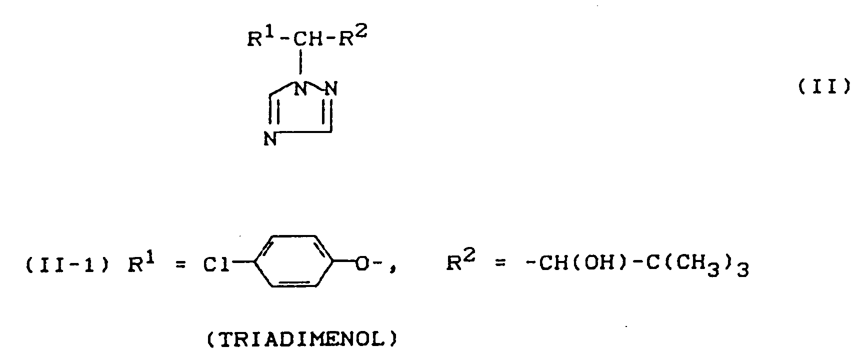 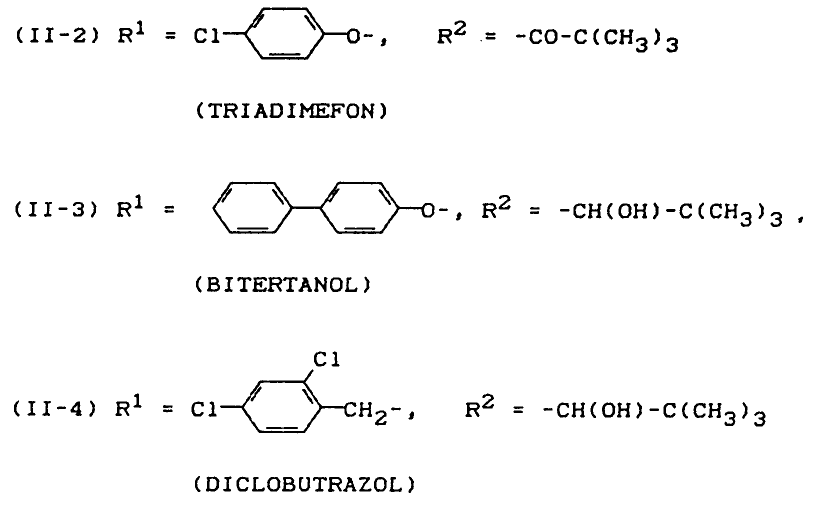 und/oder mindestens
(2) einem Azol-Derivat der Formel 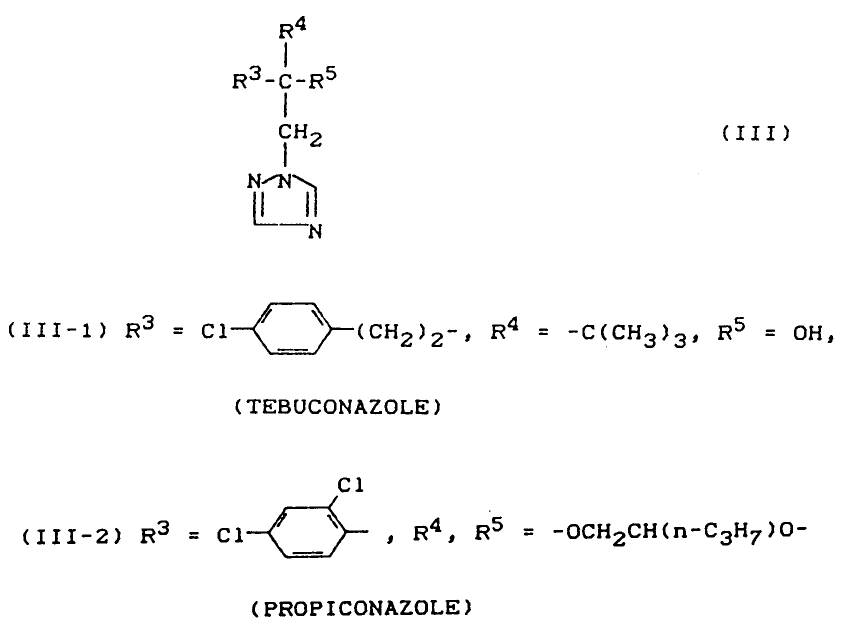 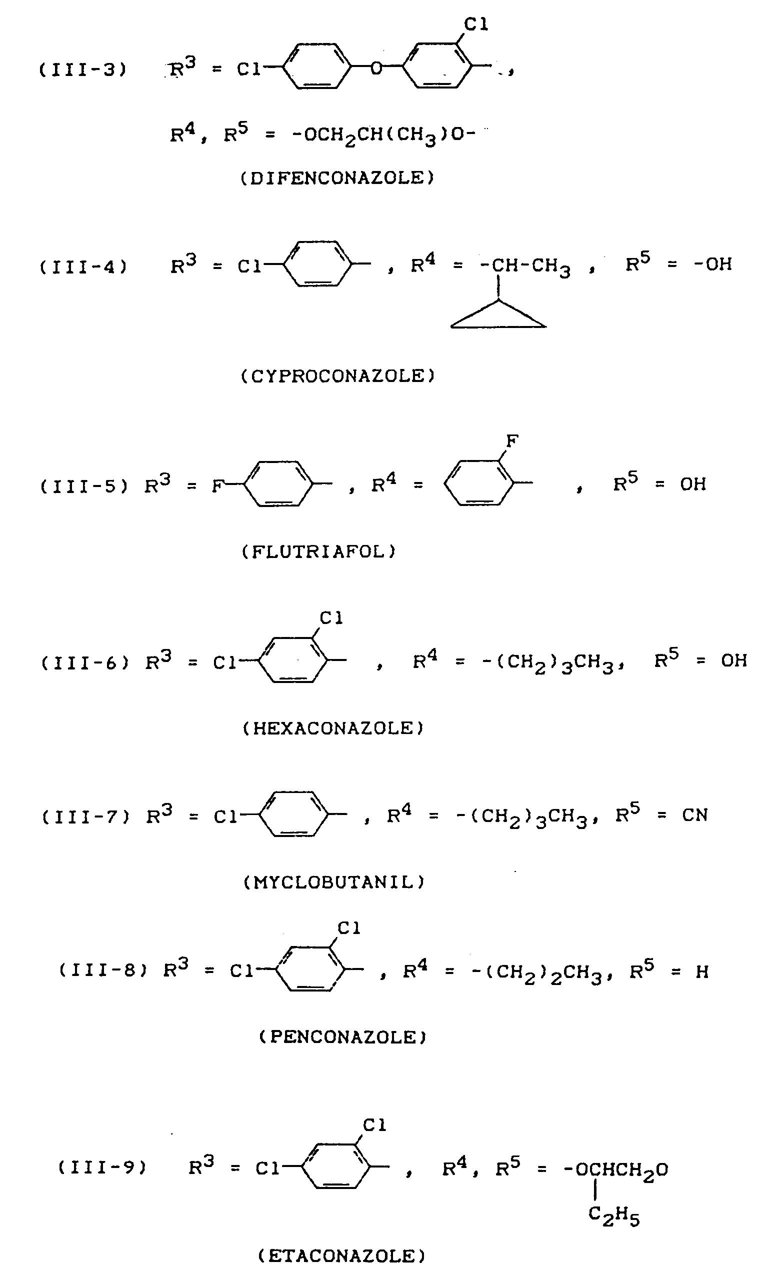 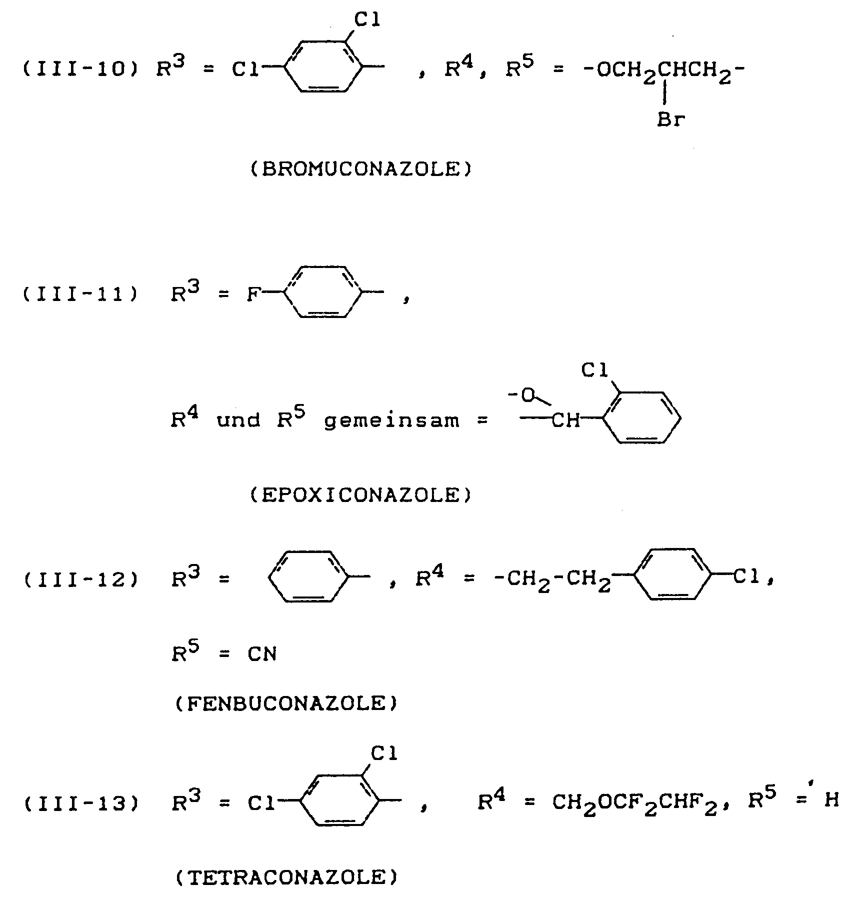 und/oder
(3) dem Azol-Derivat der Formel 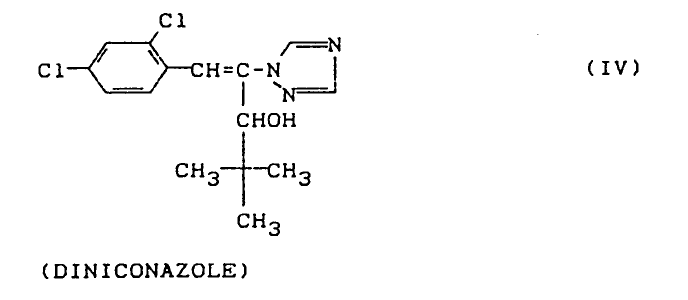 und/oder
(4) dem Azol-Derivat der Formel 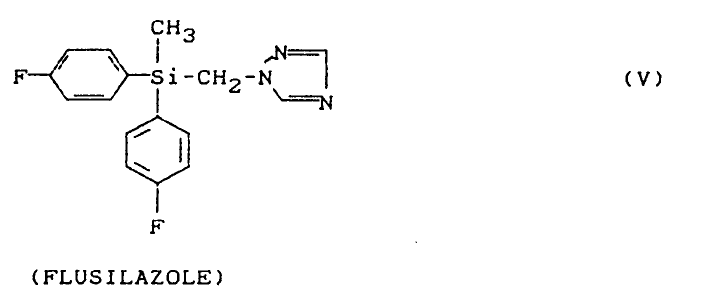
(5) dem Azol-Derivat der Formel 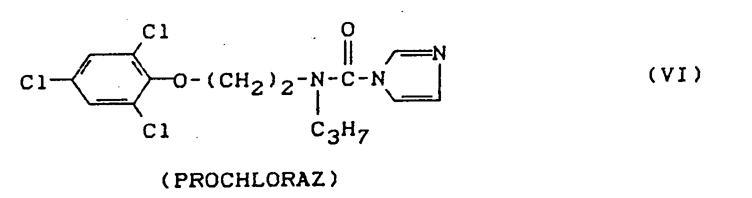 und/oder
(6) mindestens einen Azol-Derivat der Formel 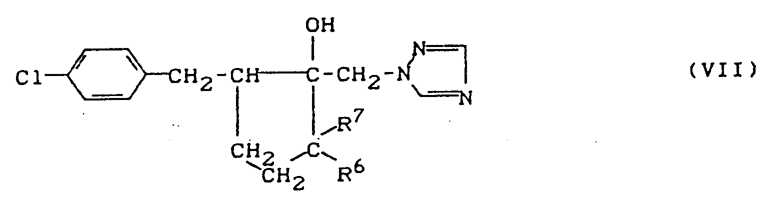 (VII-1) R⁶ = CH₃ , R⁷ = CH₃
(METCONAZOLE)
(VII-2) R⁶ = H, R⁷ = CH(CH₃)₂
(IPCONAZOLE)
und/oder
(7) dem Azol-Derivat der Formel 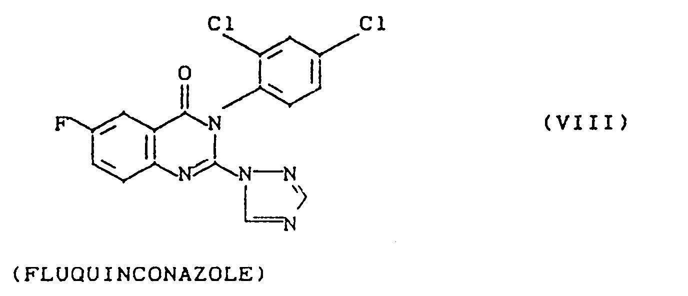 und/oder
(8) mindestens einem der Heterocyclen der Formel 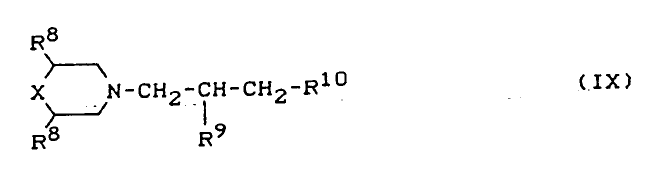 (IX-1) X = O, R⁸ = CH₃, R⁹ = H, R¹⁰ = C₁₀H₂₁
(TRIDEMORPH)
(IX-2) X = O, R⁸ = CH₃, R⁹ = H, R¹⁰ = C₉H₁₉
(ALDIMORPH) 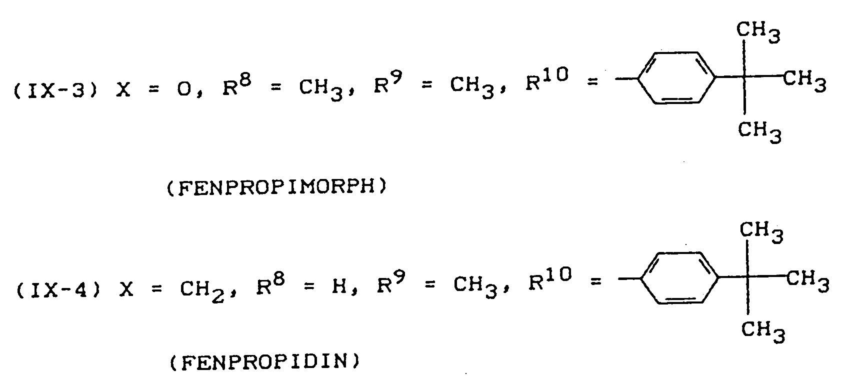 und/oder
(9) der Verbindung der Formel 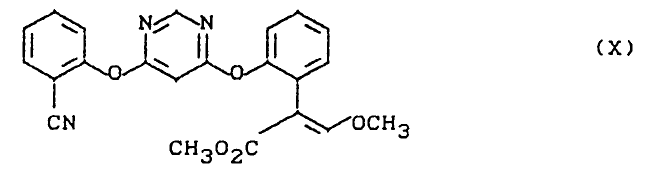 und/oder
(10) der Verbindung der Formel 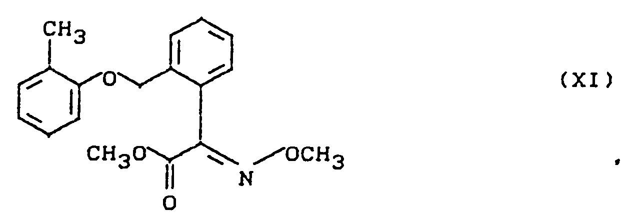 und/oder
(11) der Verbindung der Formel 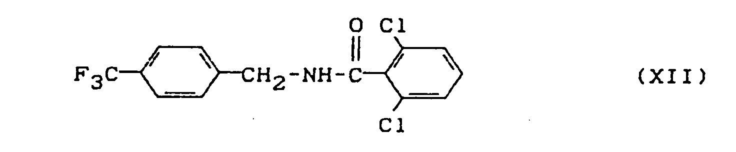 und/oder
(12) der Verbindung der Formel 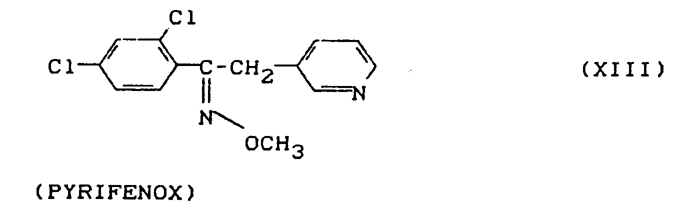 und/oder
(13) der Verbindung der Formel 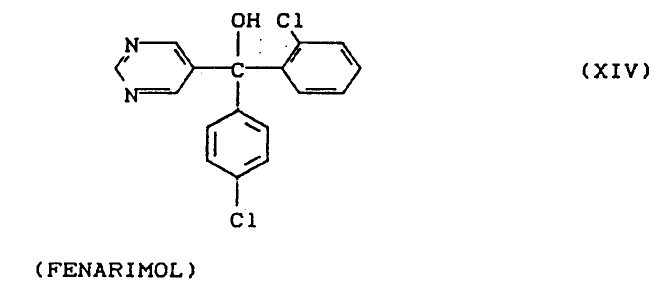 und/oder
(14) der Verbindung der Formel 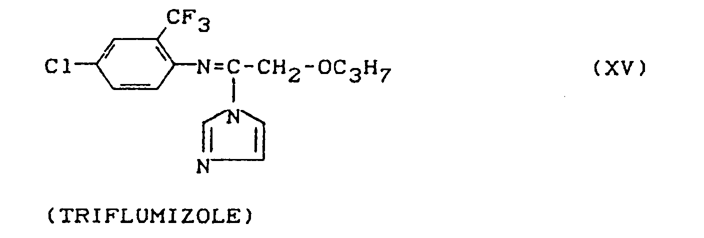 und/oder
(15) mindestens einer der Verbindungen der Formel 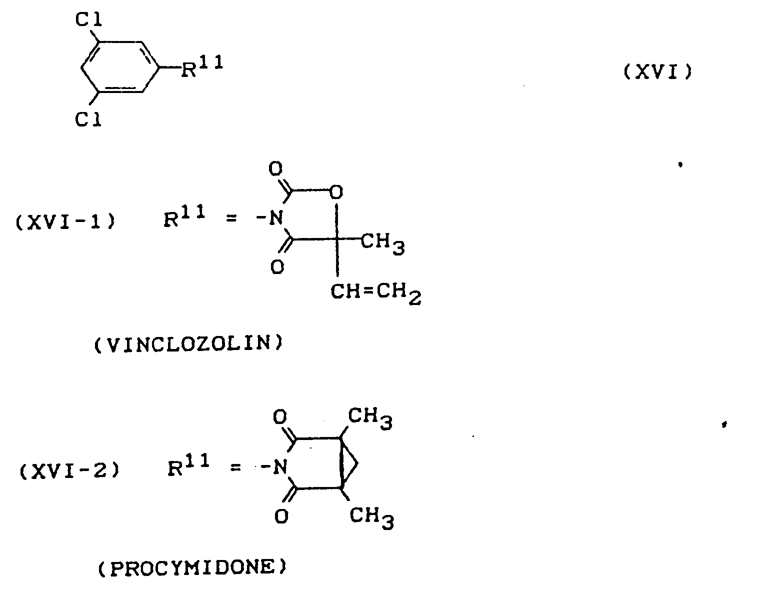 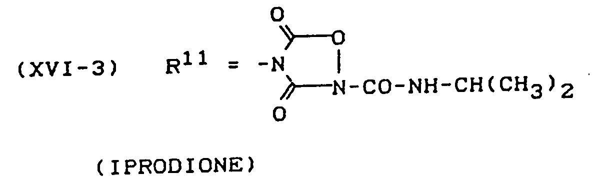 und/oder
(16) mindestens einer der Verbindungen der Formel 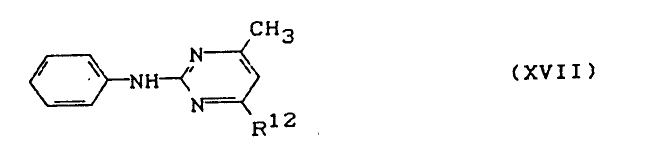 (XVII-1) R¹² = CH₃ (PYRIMETHANIL)
(XVII-2) R¹² = C≡C-CH₃ (MEPHANIPYRIM) 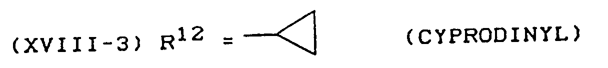 und/oder
(17) mindestens einer der Verbindungen der Formel 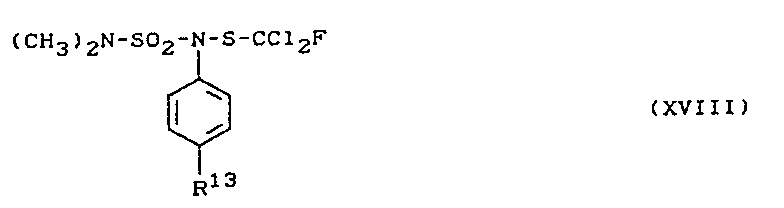 (XVIII-1) R¹³ = H
(DICHLOFLUANID)
(XVIII-2) R¹³ = CH₃
(TOLYLFLUANID)
und/oder
(18) der Verbindung der Formel 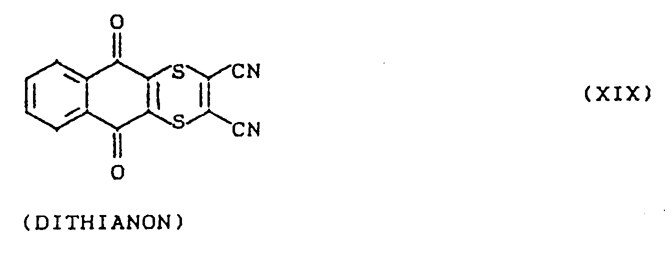 und/oder
(19) der Verbindung der Formel 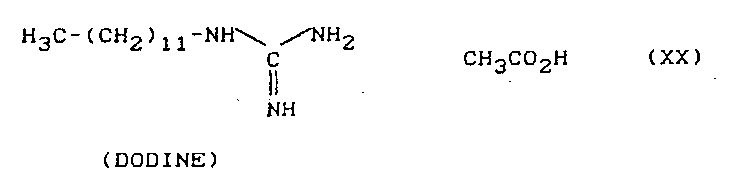 und/oder
(20) der Verbindung der Formel 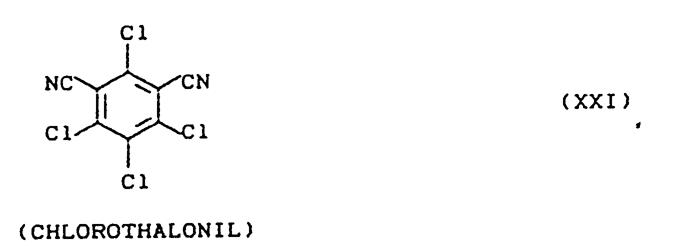 und/oder
(21) der Verbindung der Formel 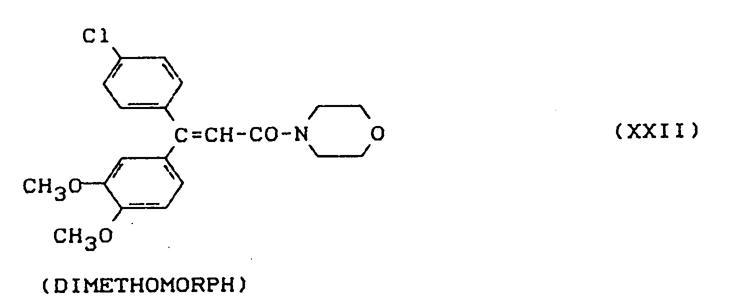 und/oder
(22) der Verbindung der Formel 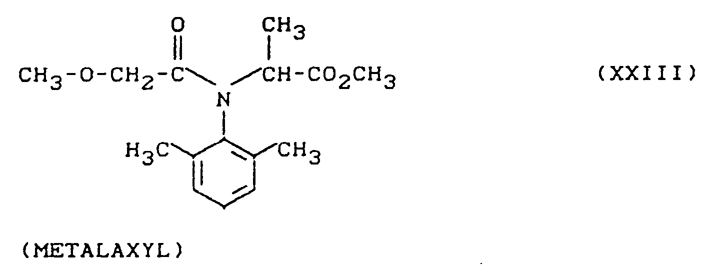 und/oder
(23) der Verbindung der Formel 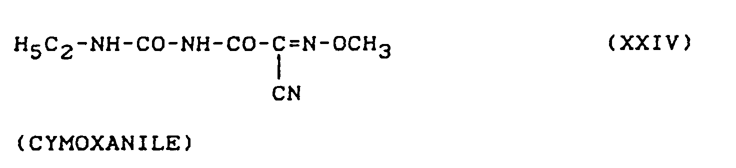 und/oder
(24) der Verbindung der Formel 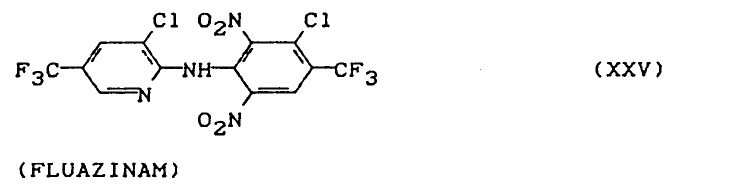 und/oder
(25) der Verbindung der Formel 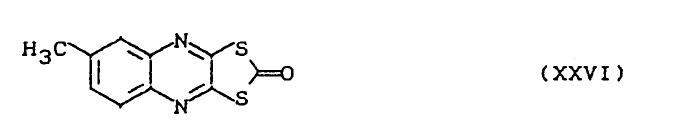 und/oder
(26) mindestens einer der Verbindungen der Formel
Cl₃C-S-R¹⁴ (XXVII) 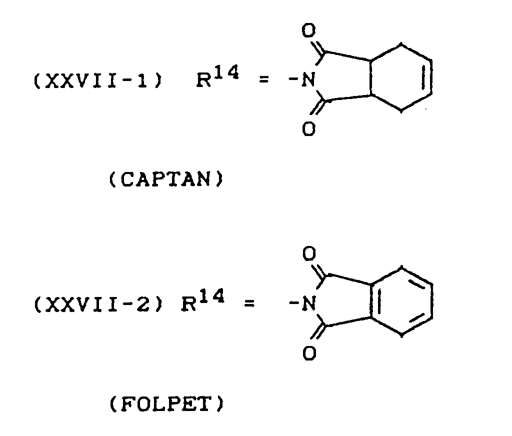
und/oder
(27) mindestens einer Verbindung der Formeln
3 Cu(OH)₂.CuCl₂.x H₂O (XXVIII-1)
und 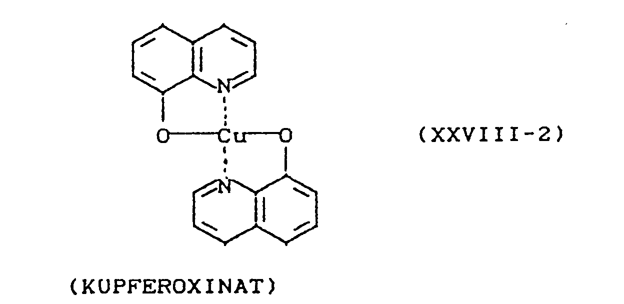 und/oder
(28) der Verbindung der Formel 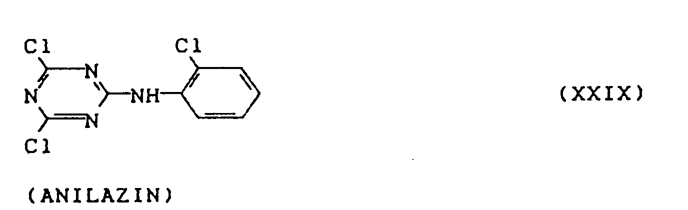 und/oder
(29) der Verbindung der Formel 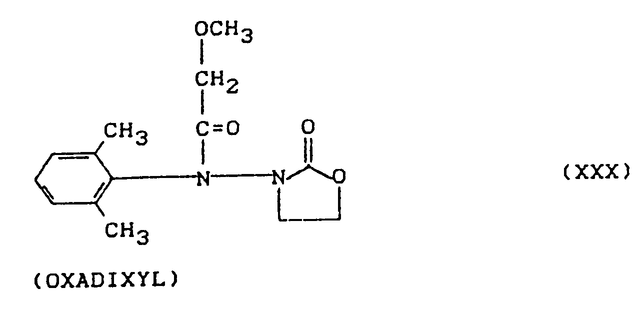 und/oder
(30) der Verbindung der Formel 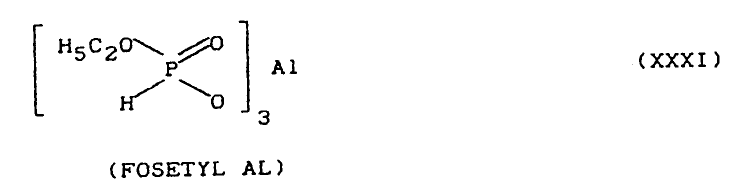 und/oder
(31) der Verbindung der Formel 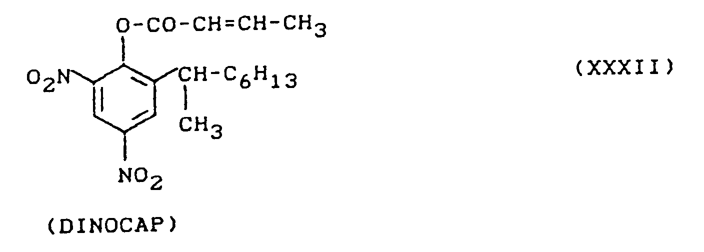 und/oder
(32) der Verbindung der Formel 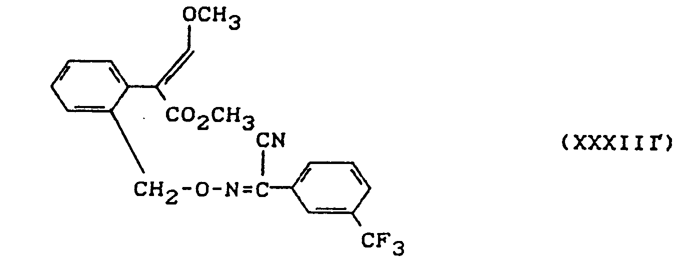 und/oder
(33) mindestens einer Verbindung der Formel 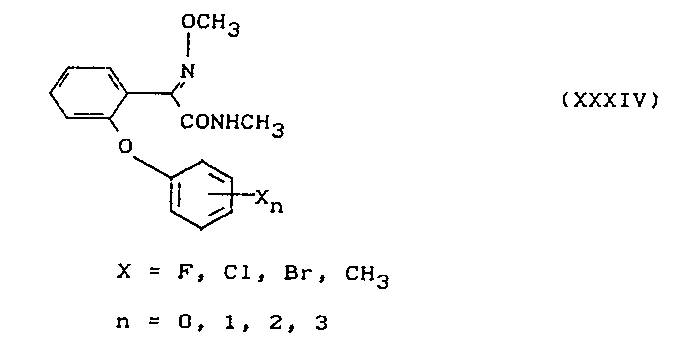 und/oder
(34) der Verbindung der Formel 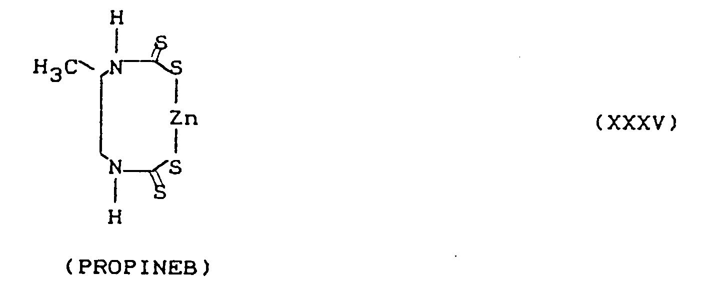 und/oder
(35) mindestens einer Verbindung der Formel 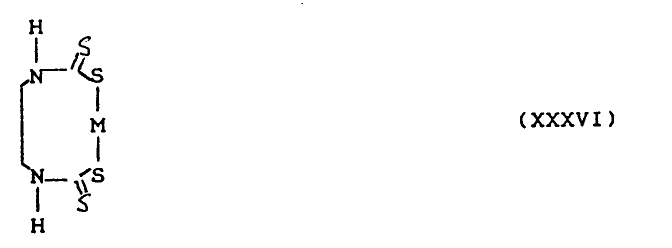 (XXXVI-1) M = Zn (ZINEB)
(XXXVI-2) M = Mn (MANEB)
(XXXVI-3) = Gemisch aus (XXXVI-1) und (XXXVI-2)
(MANCOZEB)
und/oder
(36) mindestens einer Verbindung der Formel 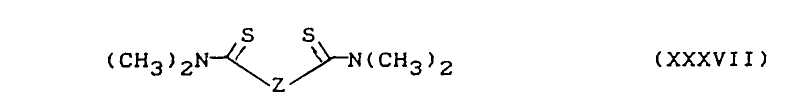 (XXXVII-1) Z = -S-S- (THIRAM)
(XXXVII-2) Z = -S-Zn-S- (ZIRAM)
und/oder
(37) der Verbindung der Formel 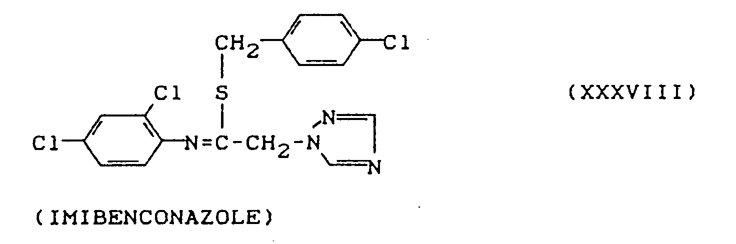 und/oder
(38) der Verbindung der Formel 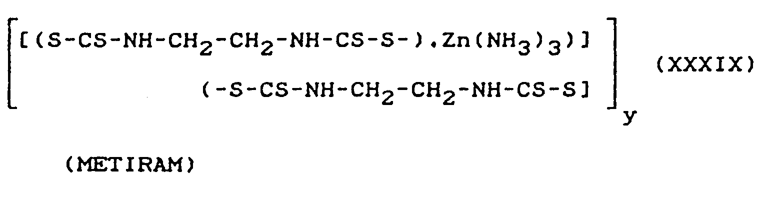 und/oder
(39) der Verbindung der Formel 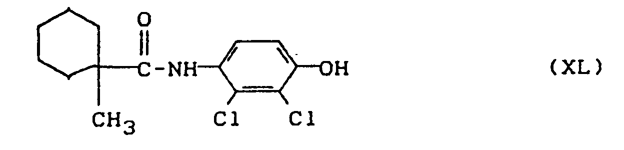 und/oder
(40) der Verbindung der Formel 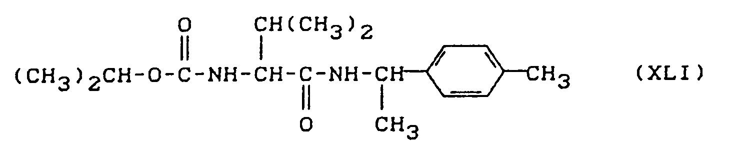 und/oder
(41) einer Verbindung der Formel
Sₓ (XLII)
(NETZSCHWEFEL)
und/oder
(42) mindestens einer der Verbindungen der Formel 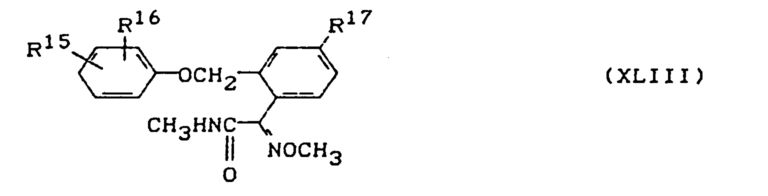 in welcher
R¹⁵ und R¹⁶ unabhängig voneinander für Wasserstoff, Halogen, Methyl oder Phenyl stehen und
R¹⁷ für Wasserstoff oder Methyl steht,
wobei in den Wirkstoffkombinationen auf 1 Gewichtsteil an Wirkstoff der Formel (I) 0,1 bis 10 Gew.-Teile an mindestens einem Wirkstoff aus den Gruppen (1) bis (42) entfallen.

2. Verfahren zur Bekämpfung von Pilzen, dadurch gekennzeichnet, daß man Wirkstoffkombinationen gemäß Anspruch 1 auf die Pilze und/oder deren Lebensraum einwirken läßt.

3. Verwendung von Wirkstoffkombinationen gemäß Anspruch 1 zur Bekämpfung von Pilzen.

4. Verfahren zur Herstellung von fungiziden Mitteln, dadurch gekennzeichnet, daß man Wirkstoffkombinationen gemäß Anspruch 1 mit Streckmitteln und/oder oberflächenaktiven Stoffen vermischt.

## Claims

1. Fungicidal agents having synergistic activity, characterized by a content of a combination of active compounds consisting of 8-t-butyl-2-(N-ethyl-N-n-propylamino)-methyl-1,4-dioxaspiro[4.5]decane of the formula 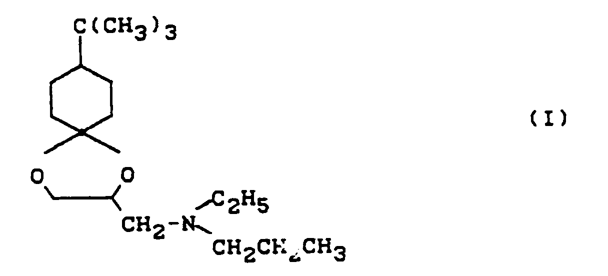 and at least
(1) one azole derivative of the formula 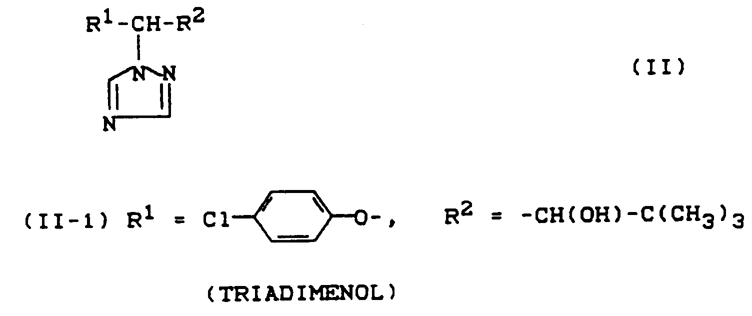 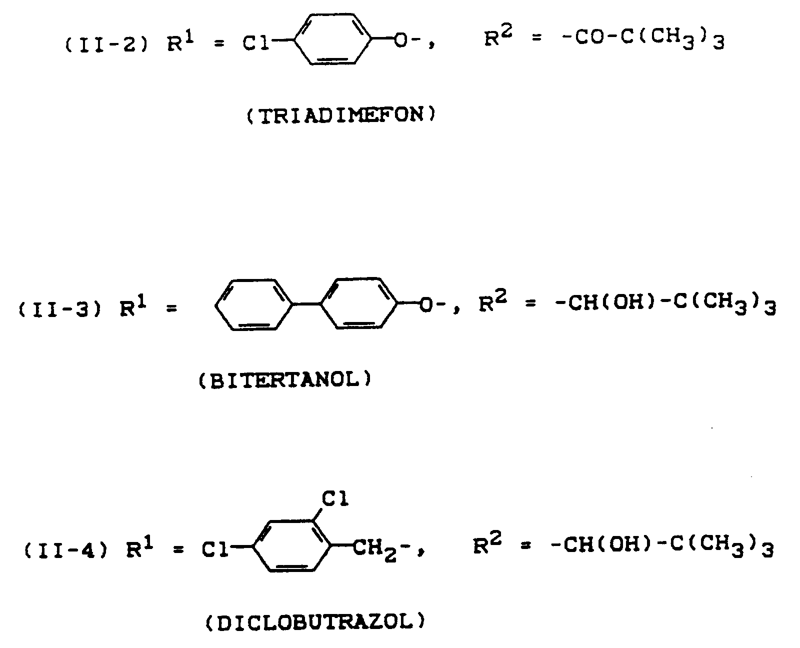 and/or at least
(2) one azole derivative of the formula 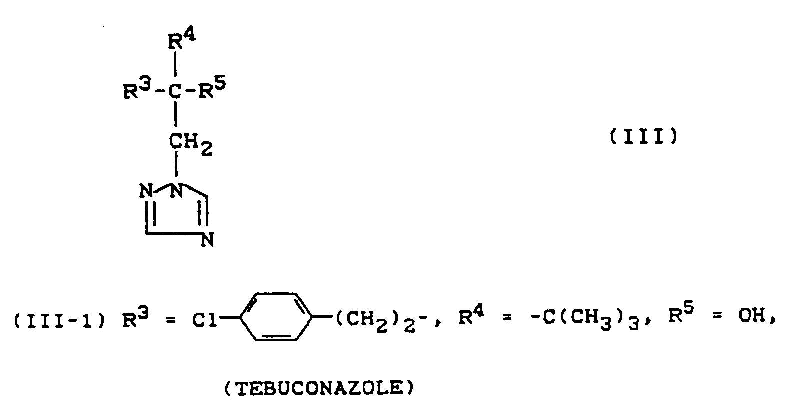 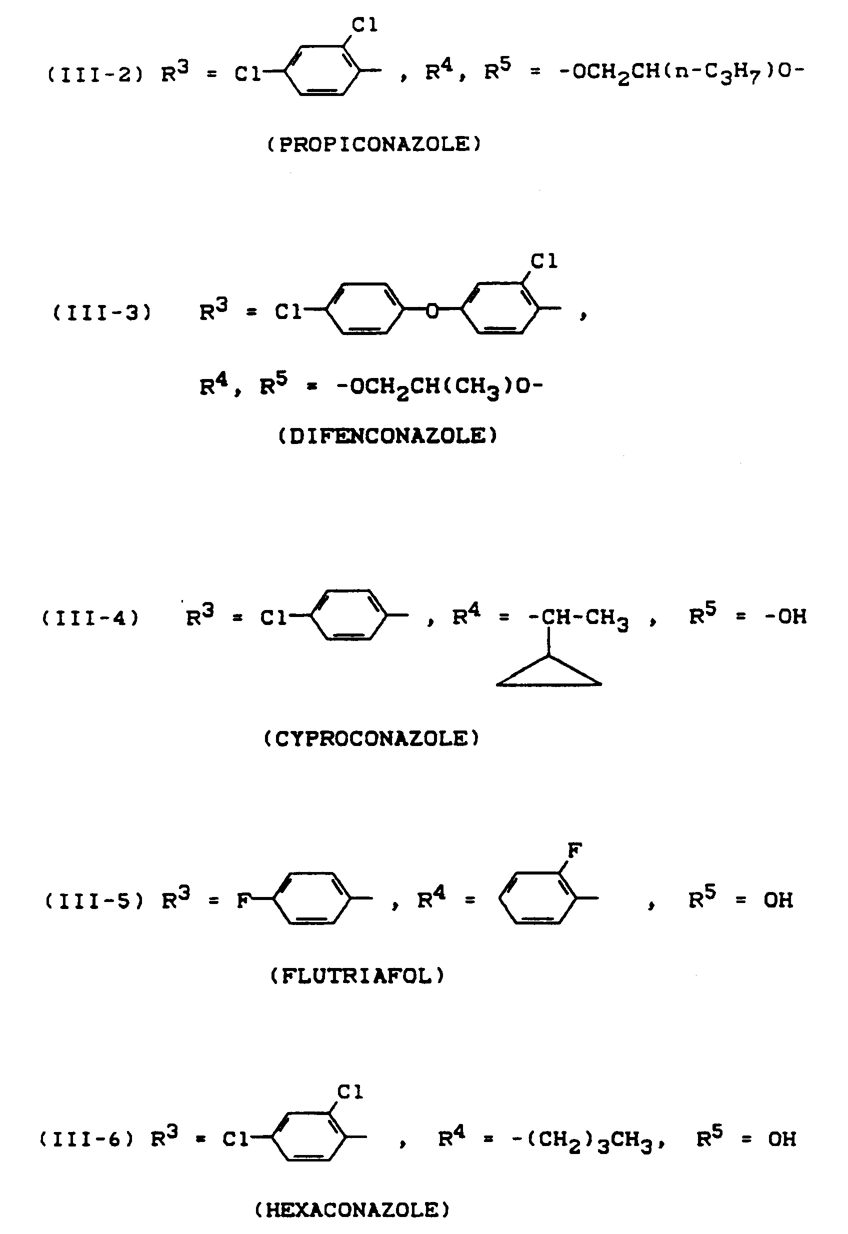 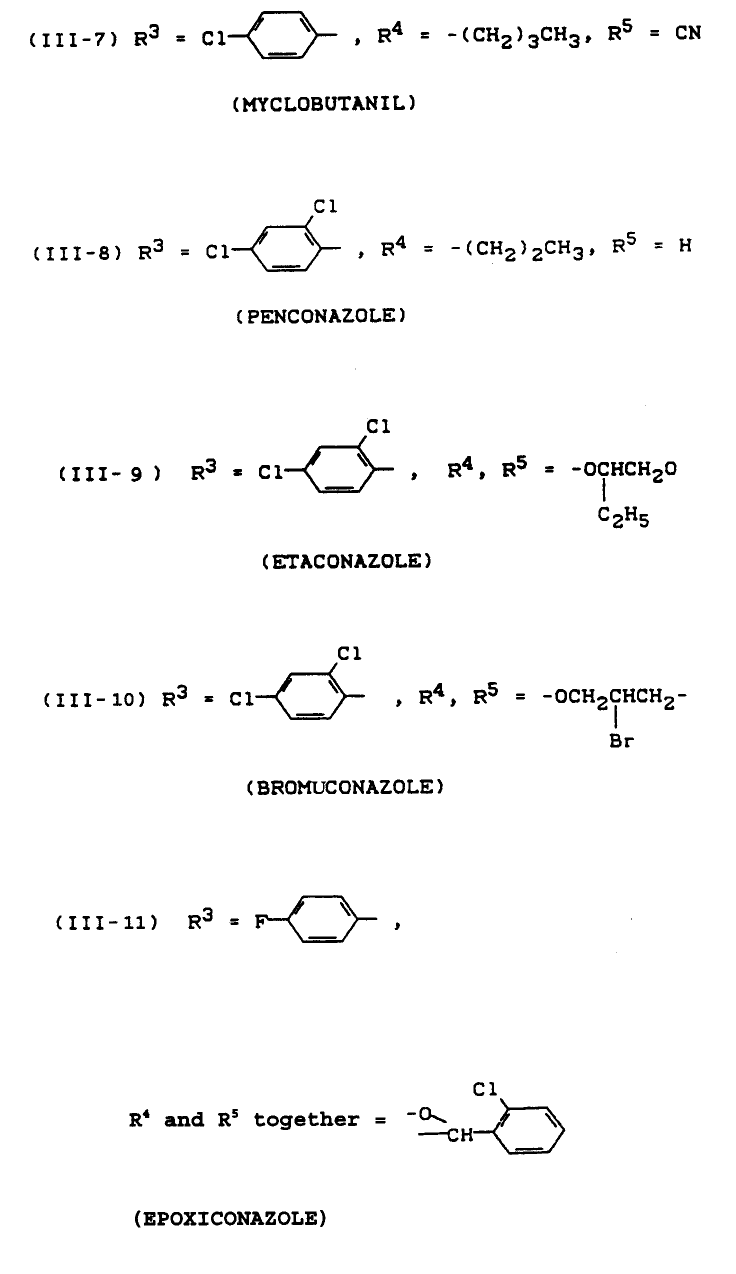 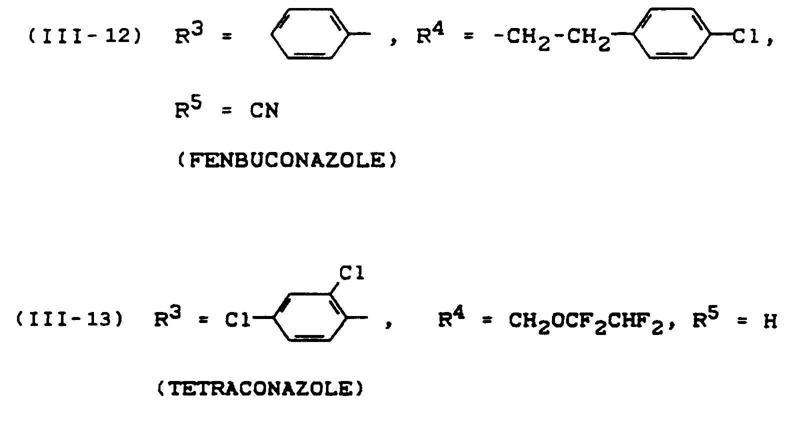 and/or
(3) the azole derivative of the formula 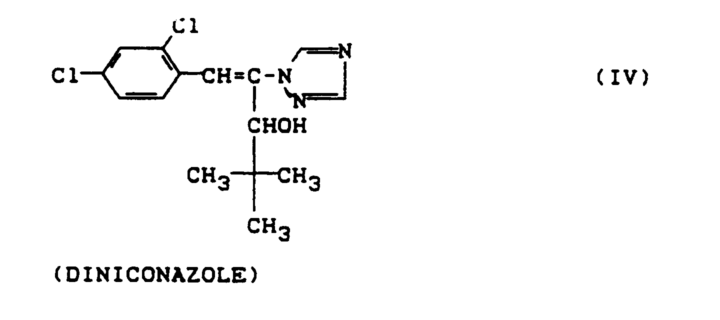 and/or
(4) the azole derivative of the formula 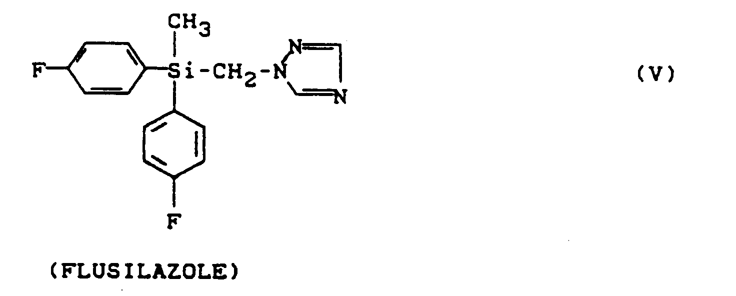 and/or
(5) the azole derivative of the formula 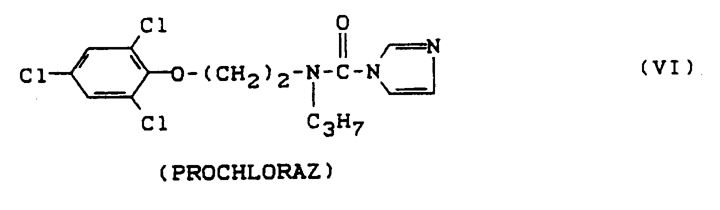 and/or
(6) at least one azole derivative of the formula 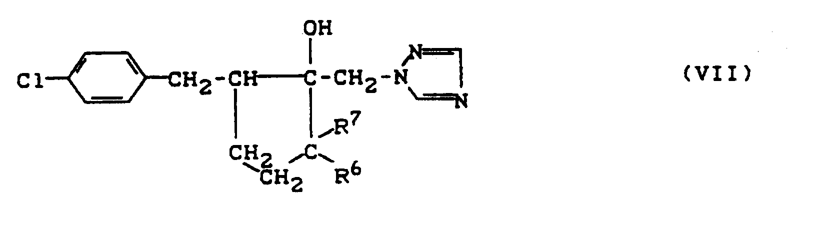 (VII-1) R⁶ = CH₃ , R⁷ = CH₃
(METCONAZOLE)
(VII-2) R⁶ = H, R⁷ = CH(CH₃)₂
(IPCONAZOLE)
and/or
(7) the azole derivative of the formula 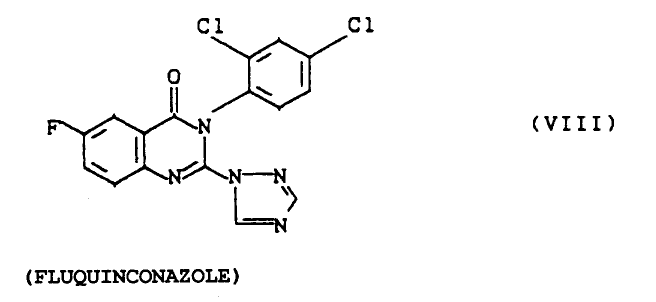 and/or
(8) at least one of the heterocycles of the formula 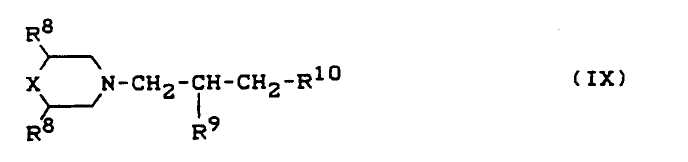 (IX-1) X = O, R⁸ = CH₃, R⁹ = H, R¹⁰ = C₁₀H₂₁
(TRIDEMORPH)
(IX-2) X = O, R⁸ = CH₃, R⁹ = H, R¹⁰ = C₉H₁₉
(ALDIMORPH) 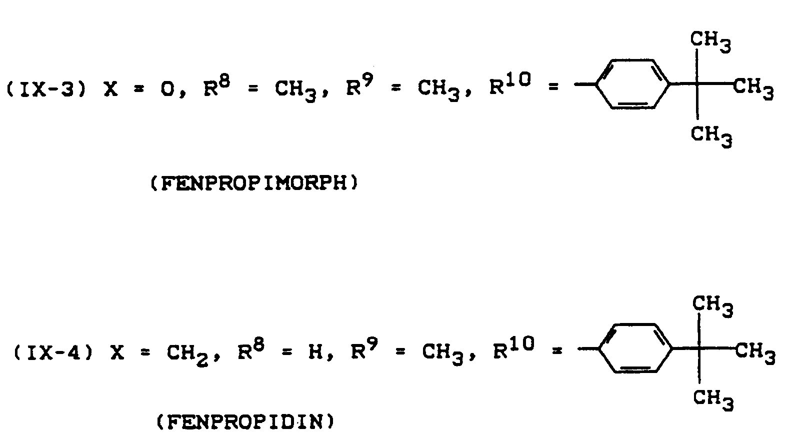 and/or
(9) the compound of the formula 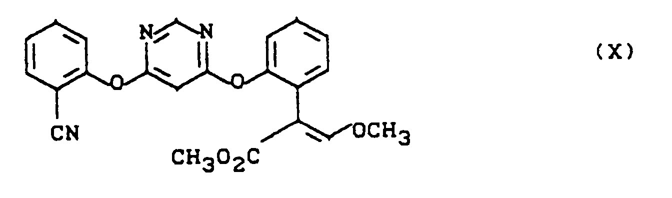 and/or
(10) the compound of the formula 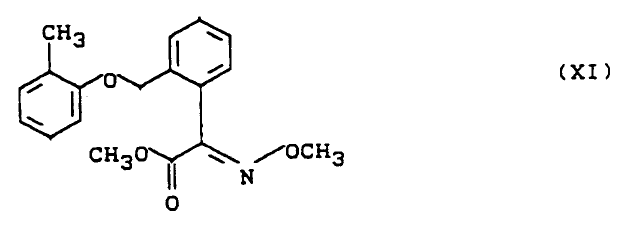 and/or
(11) the compound of the formula 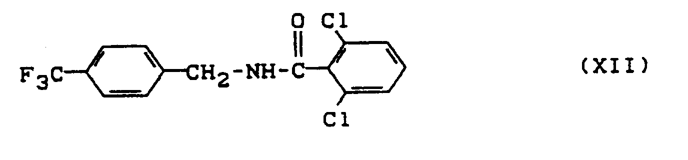 and/or
(12) the compound of the formula 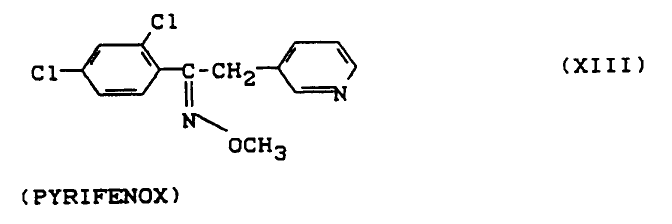 and/or
(13) the compound of the formula 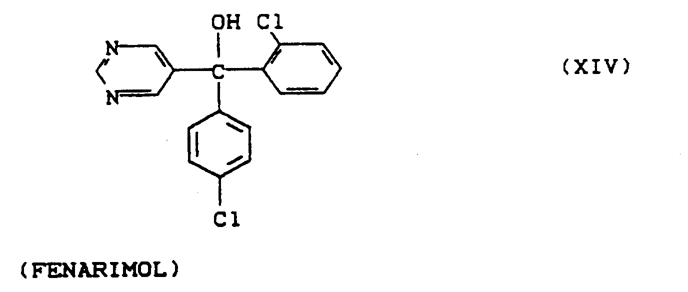 and/or
(14) the compound of the formula 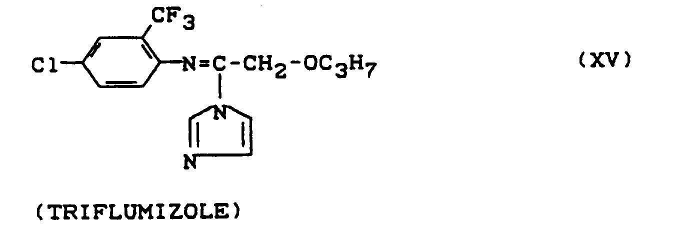 and/or
(15) at least one of the compounds of the formula 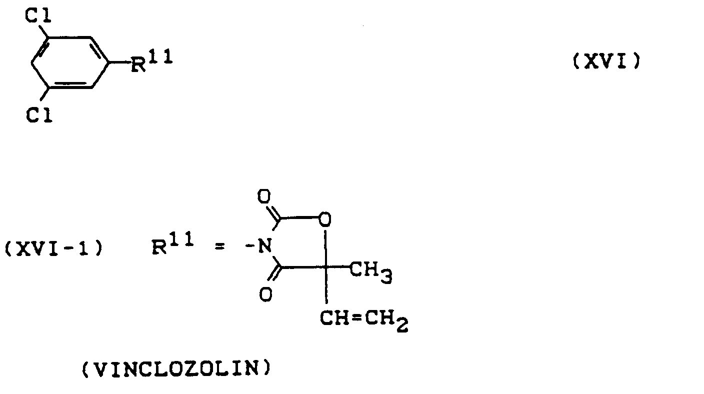 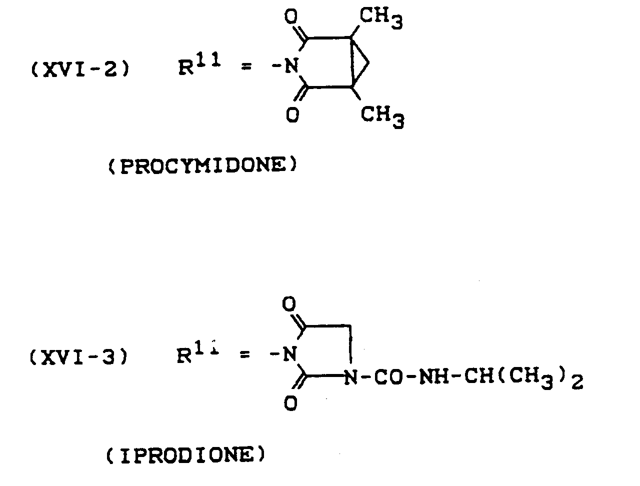 and/or
(16) at least one of the compounds of the formula 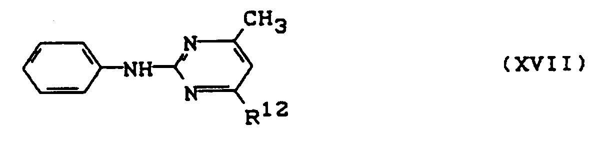 (XVII-1) R¹² = CH₃ (PYRIMETHANIL)
(XVII-2) R¹² = C≡C-CH₃ (MEPHANIPYRIM) 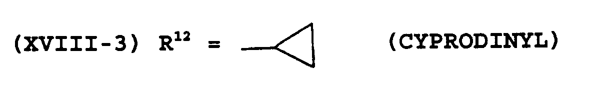 and/or
(17) at least one of the compounds of the formula 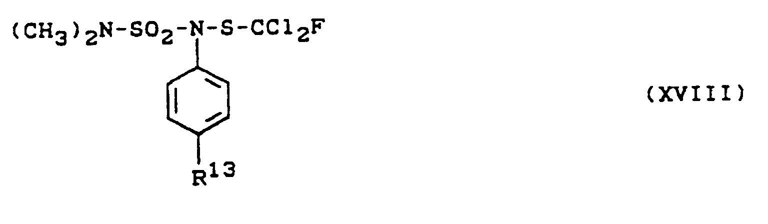 (XVIII-1) R¹³ = H
(DICHLOFLUANID)
(XVIII-2) R¹³ = CH₃
(TOLYLFLUANID)
and/or
(18) the compound of the formula 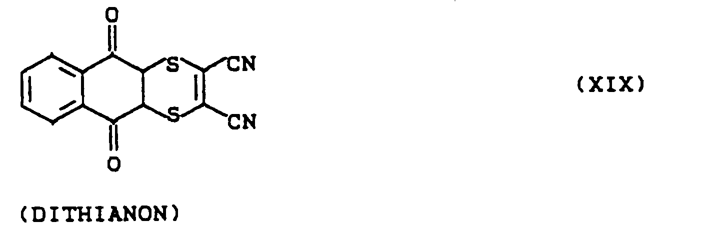 and/or
(19) the compound of the formula 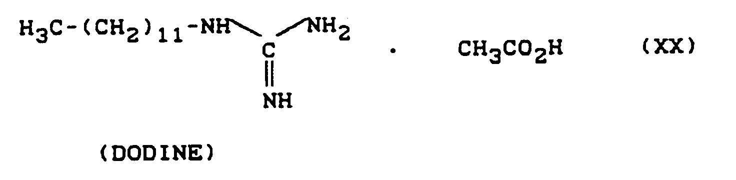 and/or
(20) the compound of the formula 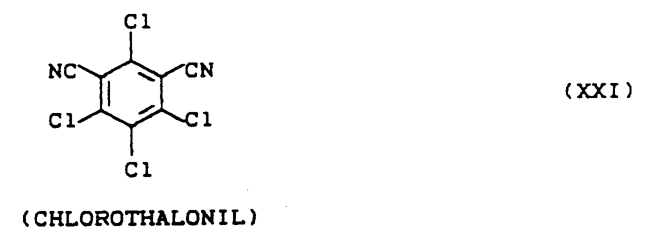 and/or
(21) the compound of the formula 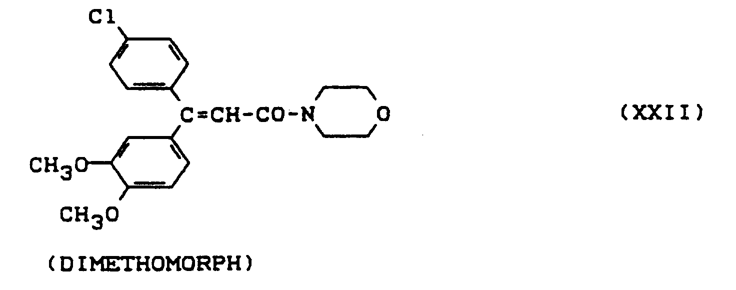 and/or
(22) the compound of the formula 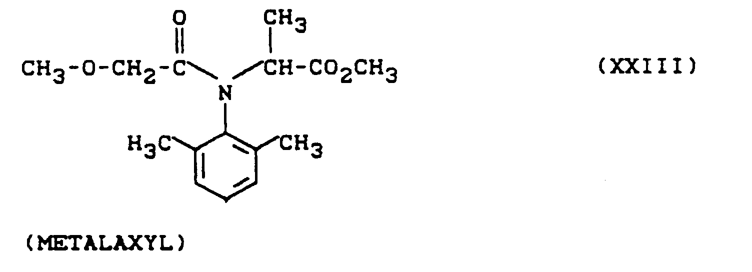 and/or
(23) the compound of the formula 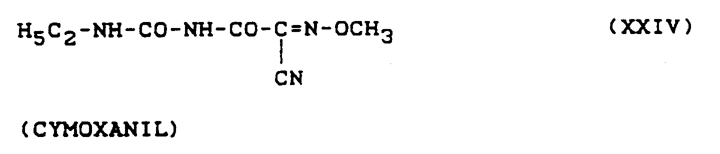 and/or
(24) the compound of the formula 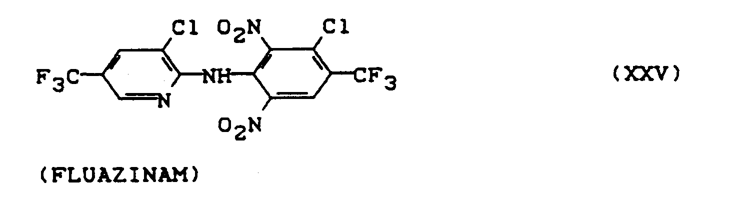 and/or
(25) the compound of the formula 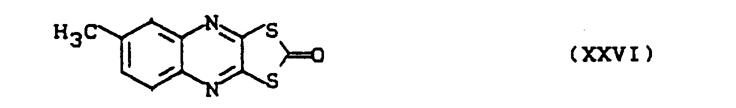 and/or
(26) at least one of the compounds of the formula
Cl₃C-S-R¹⁴ (XXVII) 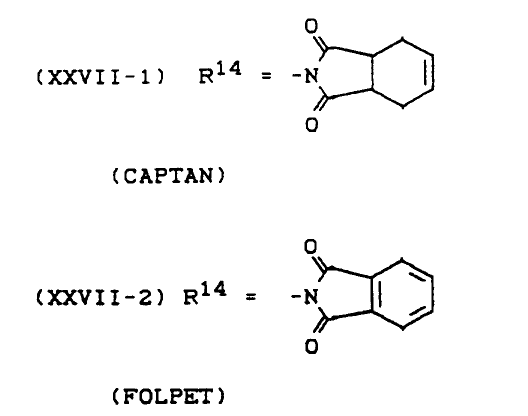
and/or
(27) at least one compound of the formulae
3 Cu(OH)₂.CuCl₂.× H₂O (XXVIII-1)
and 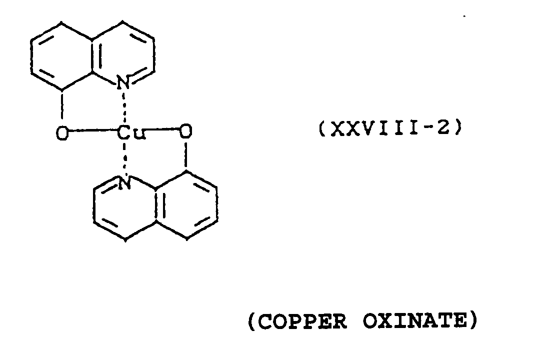 and/or
(28) the compound of the formula 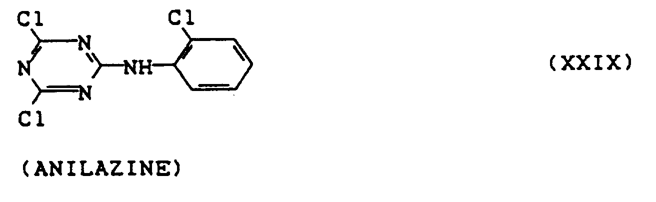 and/or
(29) the compound of the formula 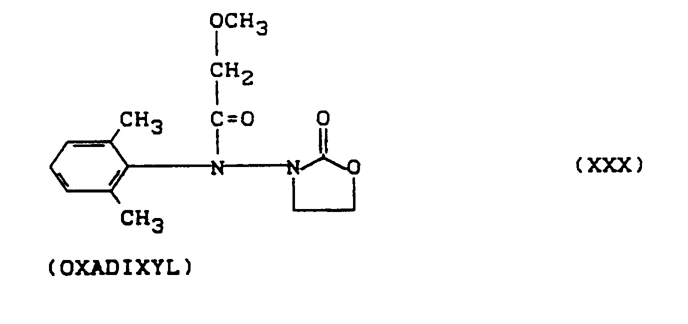 and/or
(30) the compound of the formula 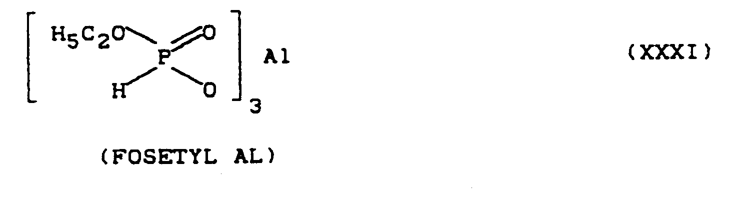 and/or
(31) the compound of the formula 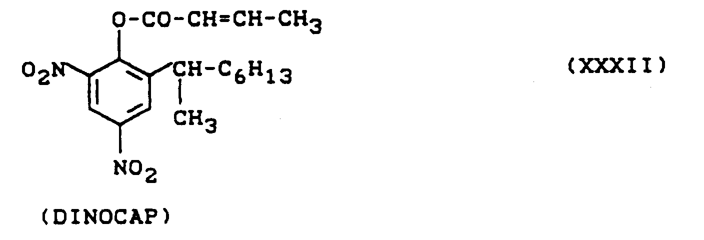 and/or
(32) the compound of the formula 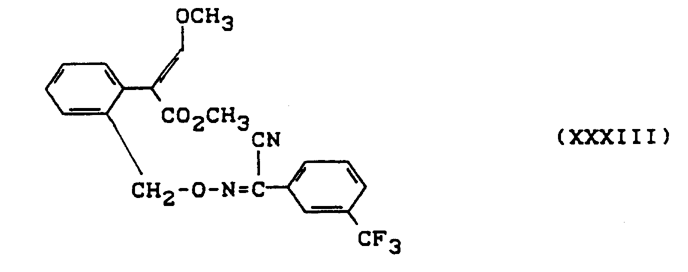 and/or
(33) at least one compound of the formula 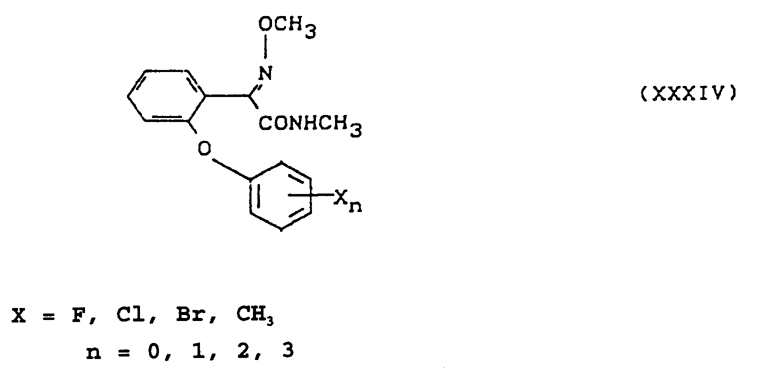 and/or
(34) the compound of the formula 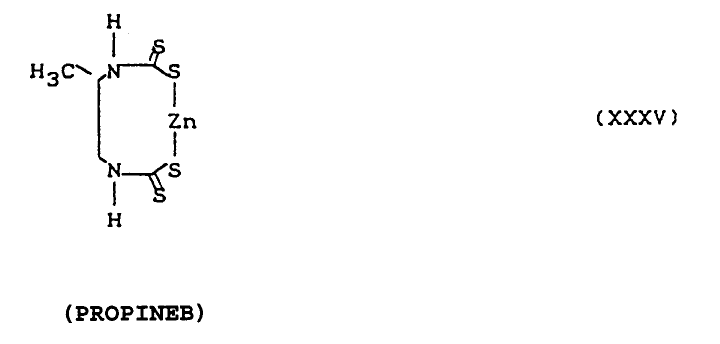 and/or
(35) at least one compound of the formula 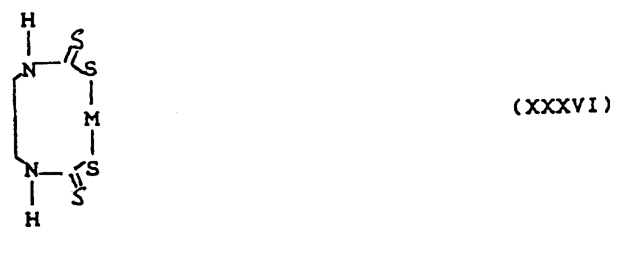 (XXXVI-1) M = Zn (ZINEB)
(XXXVI-2) M = Mn (MANEB)
(XXXVI-3) = mixture of (XXXVI-1) and (XXXVI-2)
(MANCOZEB)
and/or
(36) at least one compound of the formula 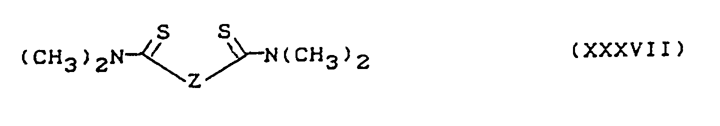 (XXXVII-1) Z = -S-S- (THIRAM)
(XXXVII-2) Z = -S-Zn-S- (ZIRAM)
and/or
(37) the compound of the formula 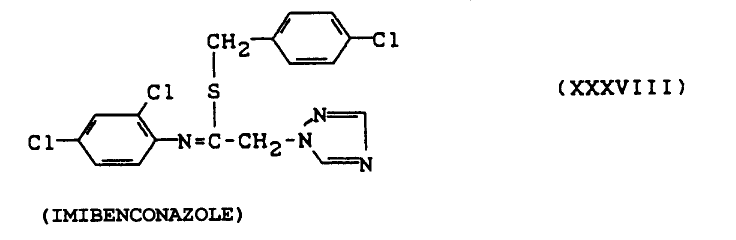 and/or
(38) the compound of the formula 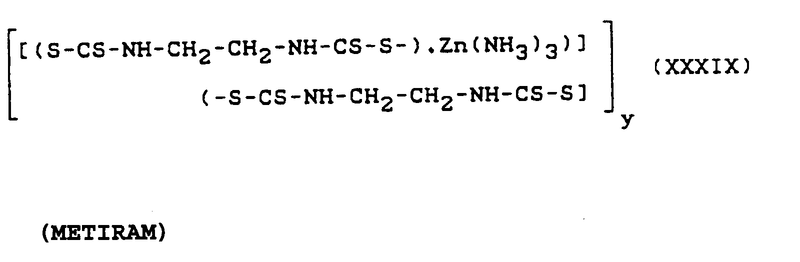 and/or
(39) the compound of the formula 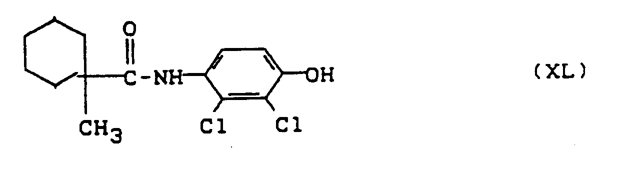 and/or
(40) the compound of the formula 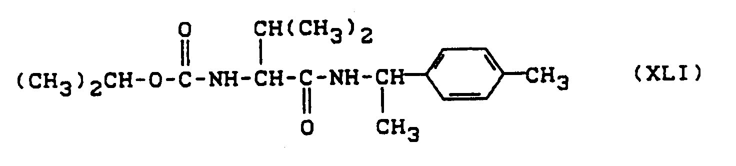 and/or
(41) a compound of the formula
Sₓ (XLII)
(WETTABLE SULPHUR)
and/or
(42) at least one of the compounds of the formula 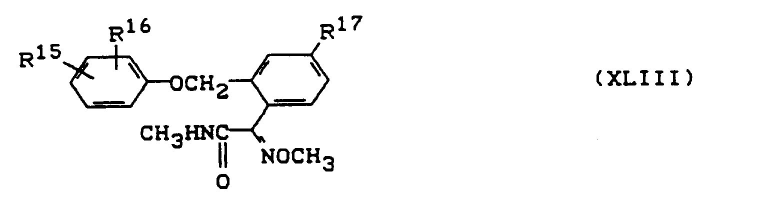 in which
R¹⁵ and R¹⁶, independently of each other, represent hydrogen, halogen, methyl or phenyl, and
R¹⁷ represents hydrogen or methyl with, in the combinations of active compounds, 0.1 to 10 parts by weight of at least one active compound from the groups (1) to (42) being apportioned to 1 part by weight of active compound of the formula (I).

2. Process for controlling fungi, characterized in that combinations of active compounds according to Claim 1 are allowed to act on the fungi and/or their habitat.

3. Use of combinations of active compounds according to Claim 1 for controlling fungi.

4. Process for preparing fungicidal agents, characterized in that combinations of active compounds according to Claim 1 are mixed with extenders and/or surface-active substances.

## Revendications

1. Compositions fongicides douées d'activité synergique, caractérisées par une teneur en une association de substances actives consistant en 8'-butyl-2-(N-éthyl-N-n-propylamino)-méthyl-1,4-dioxaspiro[4,5]décane de formule 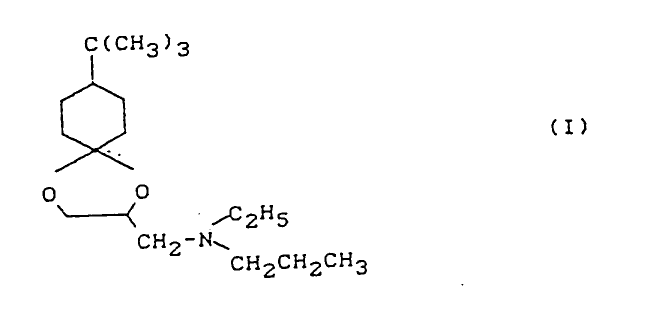 et en au moins
(1) un dérivé azolique de formule 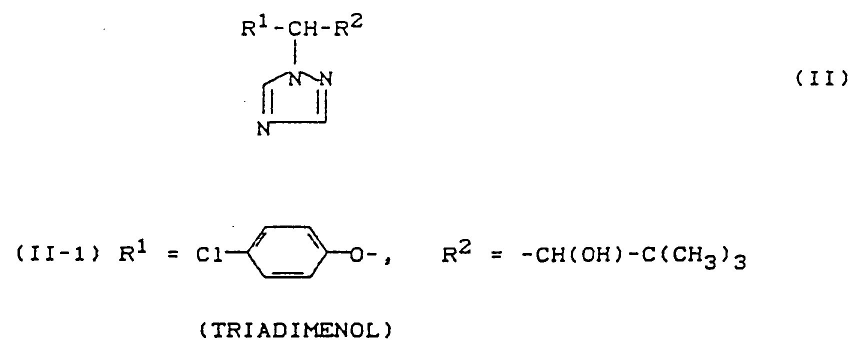 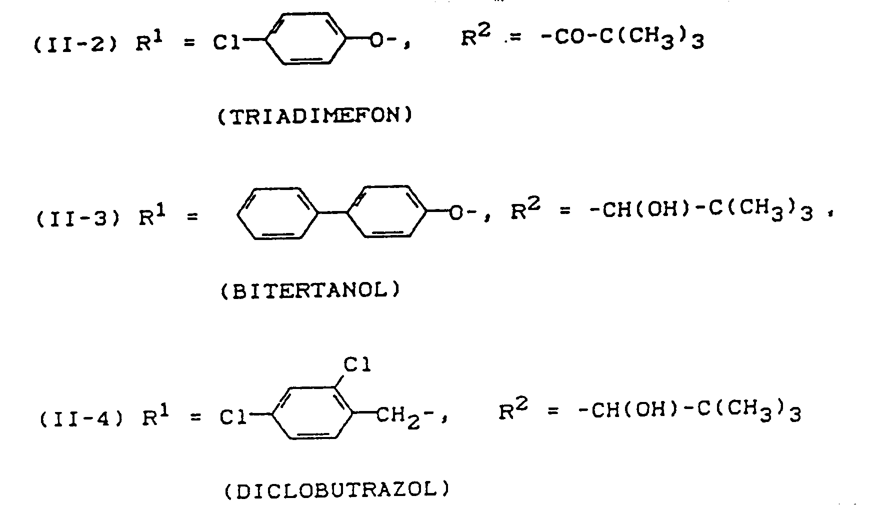 et/ou au moins
(2) un dérivé azolique de formule 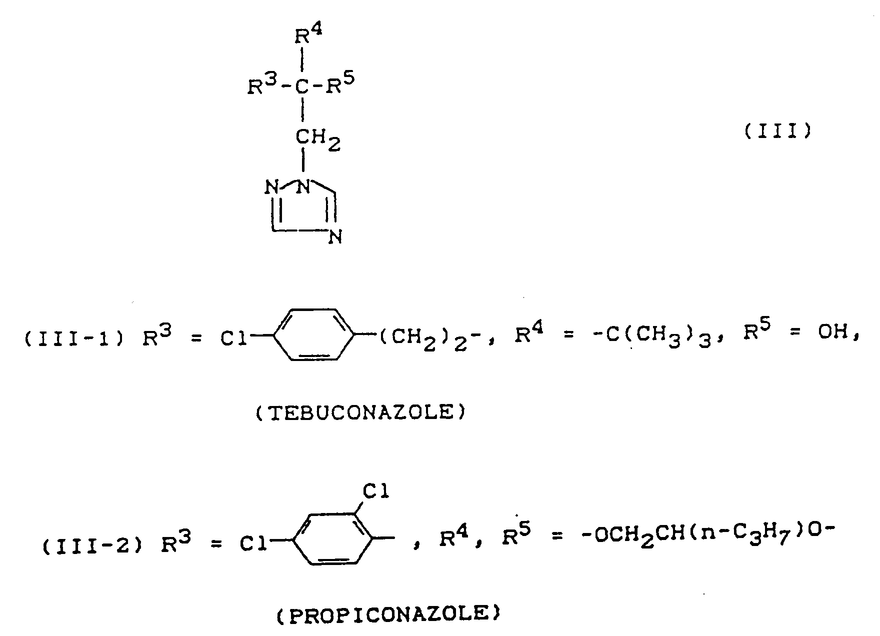 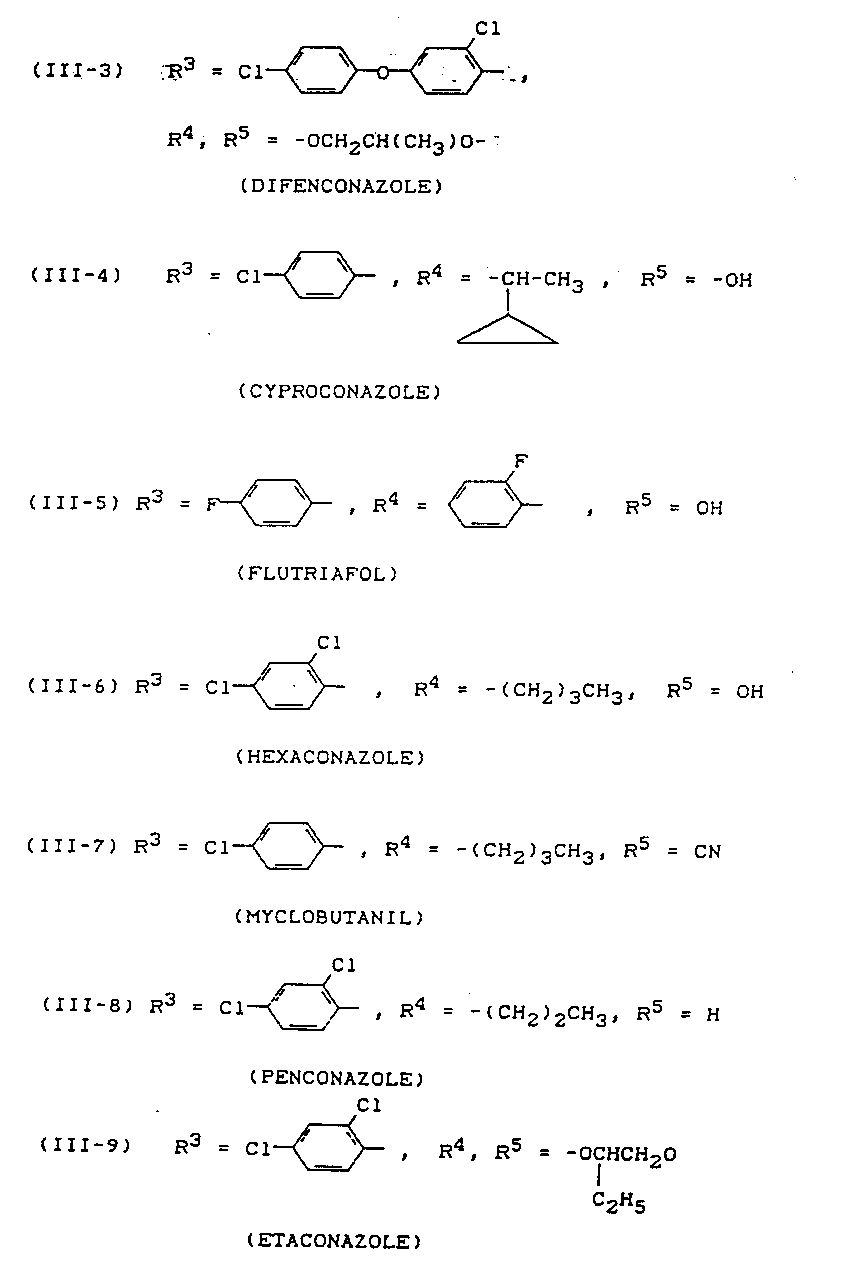 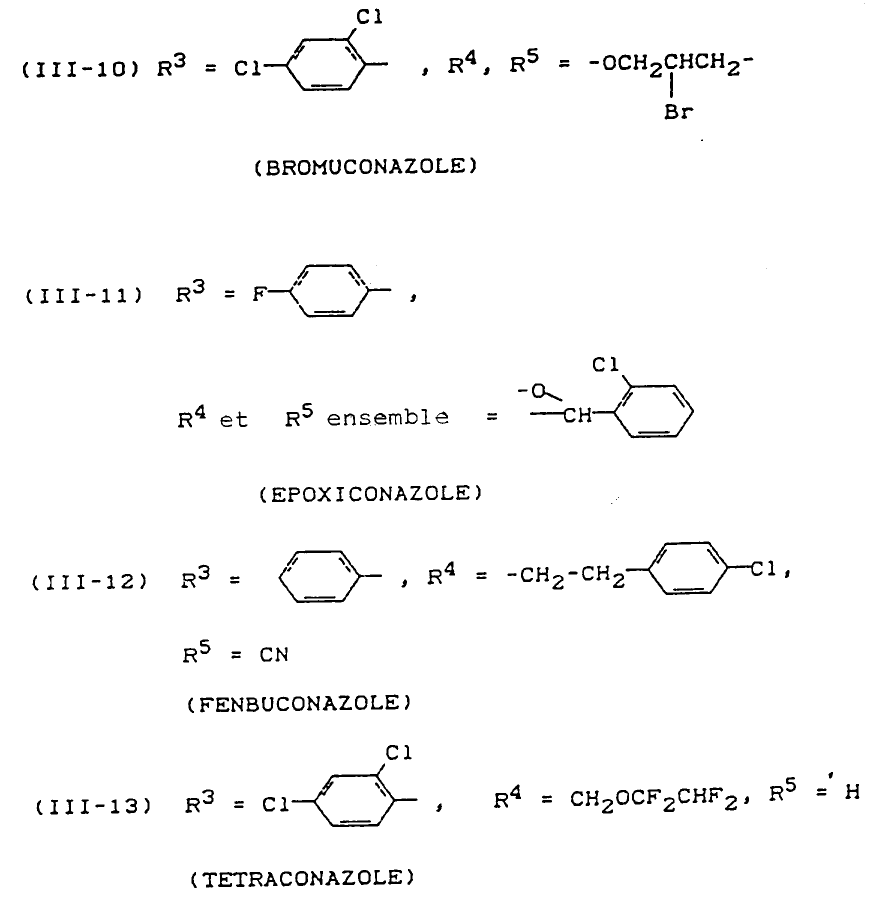 et/ou
(3) le dérivé azolique de formule 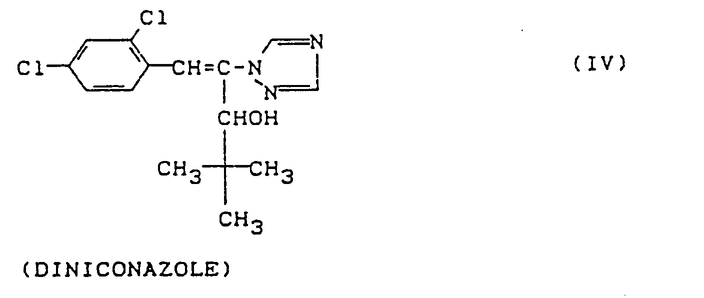 et/ou
(4) le dérivé azolique de formule 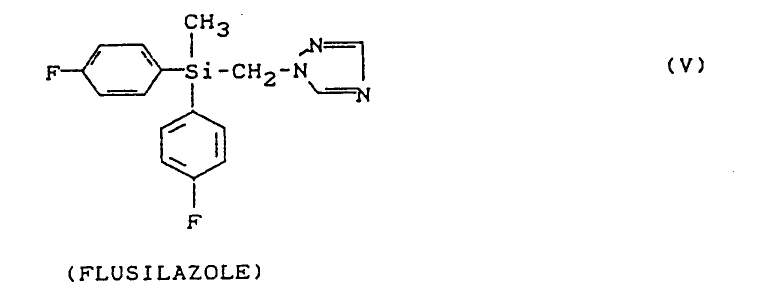
(5) le dérivé azolique de formule 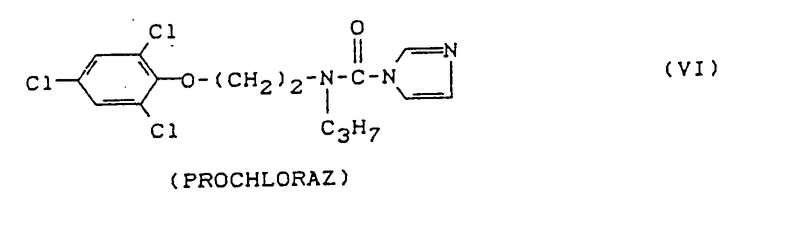 et/ou
(6) au moins un dérivé azolique de formule 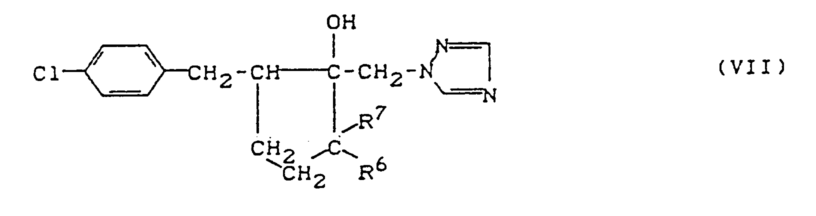 (VII-1) R⁶ = CH₃ , R⁷ = CH₃
(METCONAZOLE)
(VII-2) R⁶ = H, R⁷ = CH(CH₃)₂
(IPCONAZOLE)
et/ou
(7) le dérivé azolique de formule 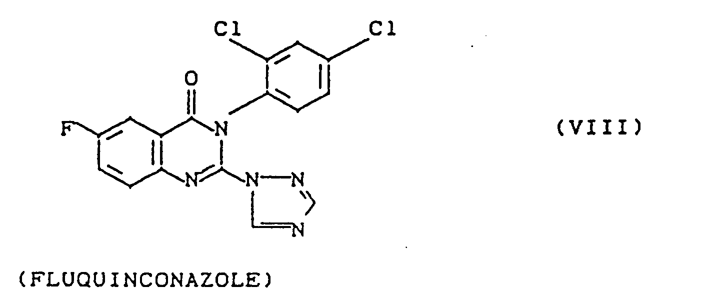 et/ou
(8) au moins l'un des hétérocycles de formules 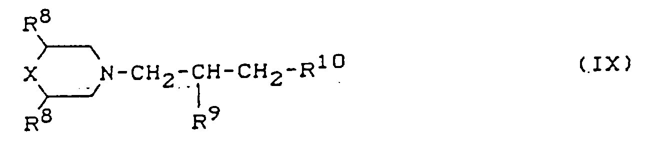 (IX-1) X = O, R⁸ = CH₃, R⁹ = H, R¹⁰ = C₁₀H₂₁
(TRIDEMORPHE)
(IX-2) X = O, R⁸ = CH₃, R⁹ = H, R¹⁰ = C₉H₁₉
(ALDIMORPHE) 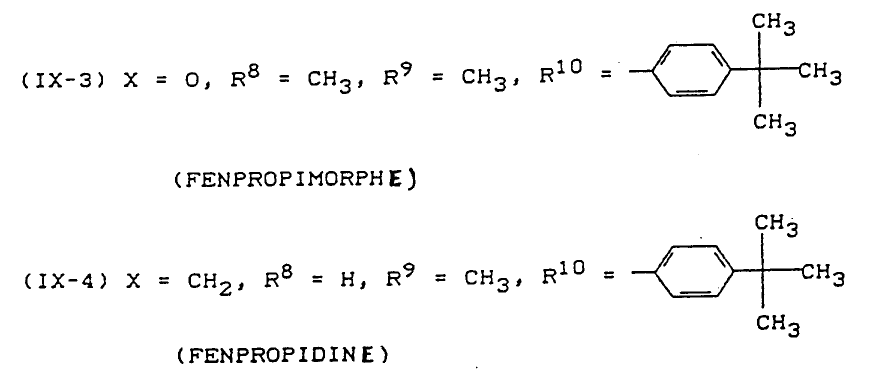 et/ou
(9) le composé de formule 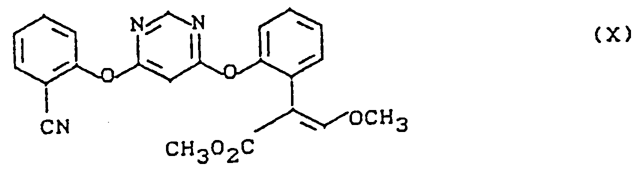 et/ou
(10) le composé de formule 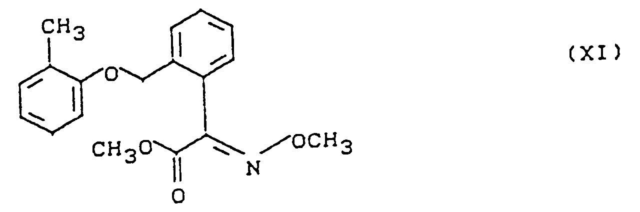 et/ou
(11) le composé de formule 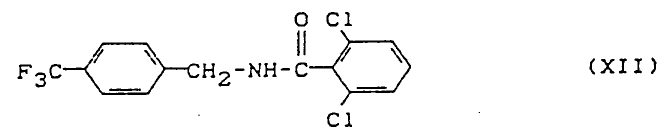 et/ou
(12) le composé de formule 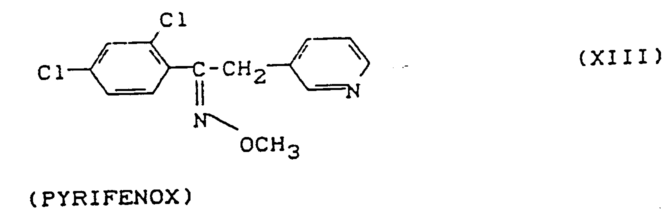 et/ou
(13) le composé de formule 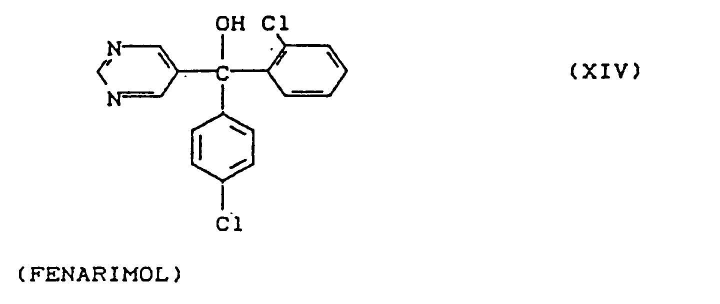 et/ou
(14) le composé de formule 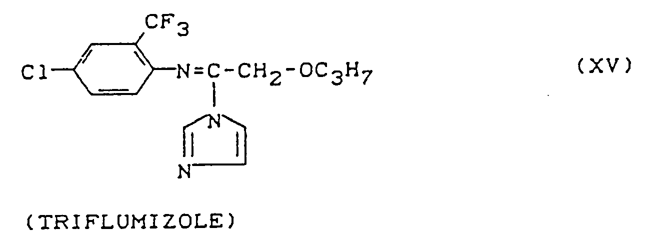 et/ou
(15) l'un au moins des composés de formules 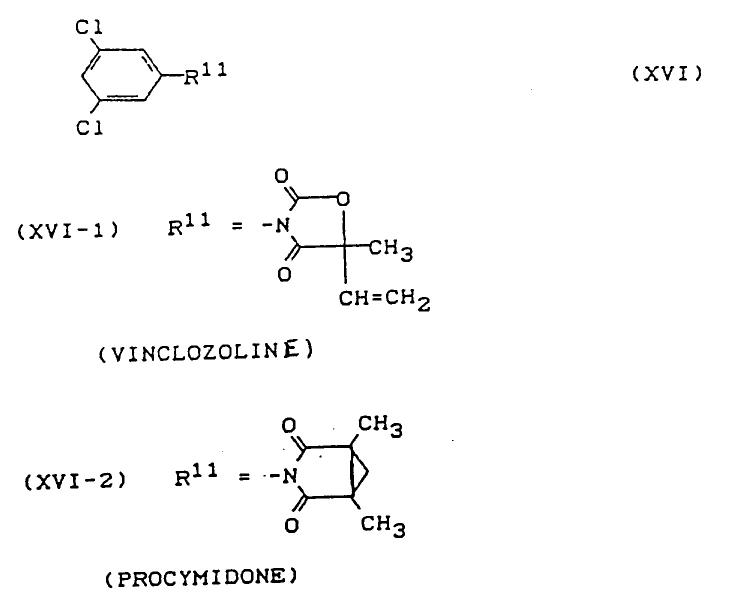 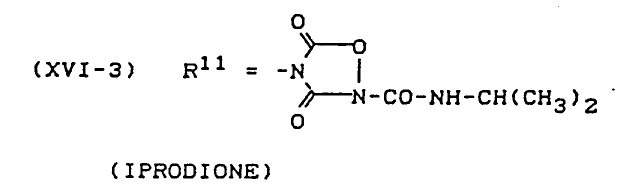 et/ou
(16) l'un au moins des composés de formule 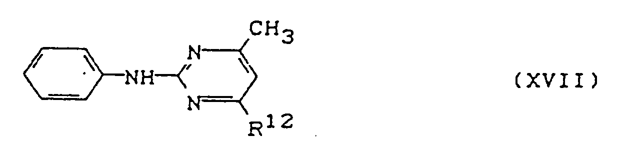 (XVII-1) R¹² = CH₃ (PYRIMETHANIL)
(XVII-2) R¹² = C≡C-CH₃ (MEPHANIPYRIM) 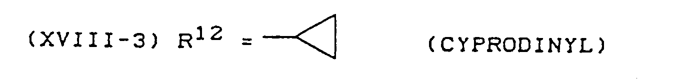 et/ou
(17) l'un au moins des composés de formule 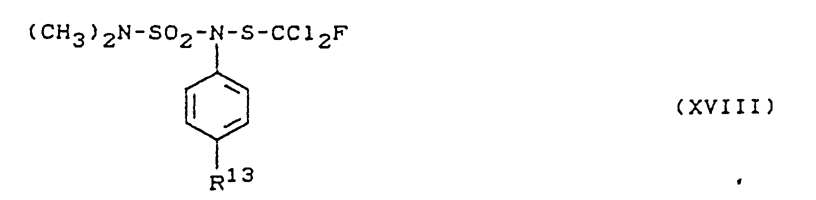 (XVIII-1) R¹³ = H
(DICHLOFLUANID)
(XVIII-2) R¹³ = CH₃
(TOLYLFLUANID)
et/ou
(18) le composé de formule 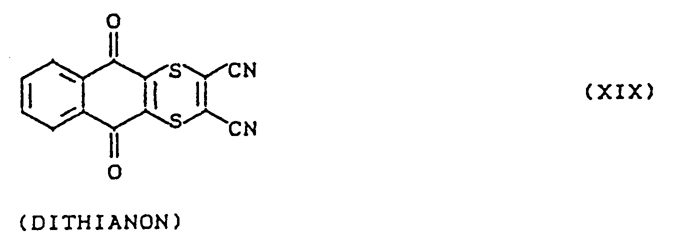 et/ou
(19) le composé de formule 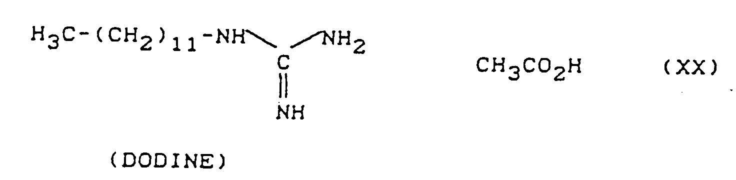 et/ou
(20) le composé de formule 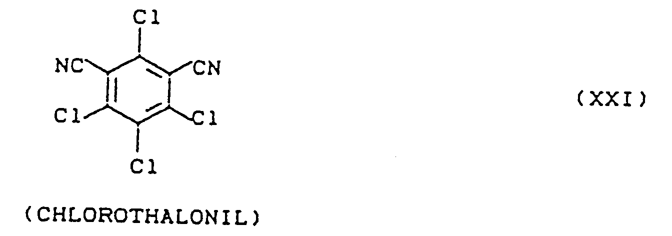 et/ou
(21) le composé de formule 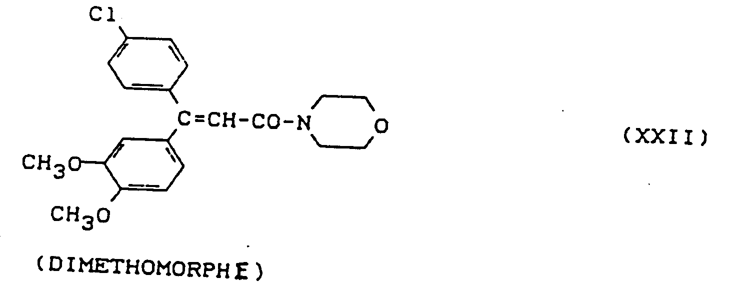 et/ou
(22) le composé de formule 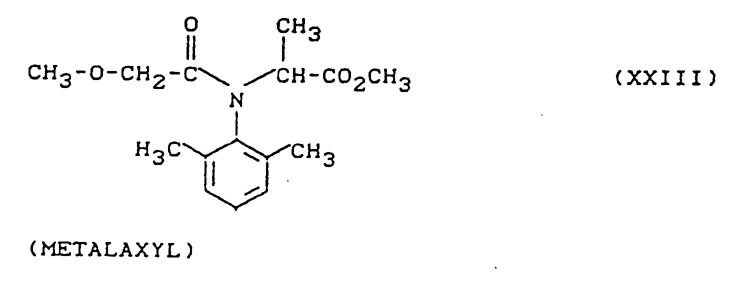 et/ou
(23) le composé de formule 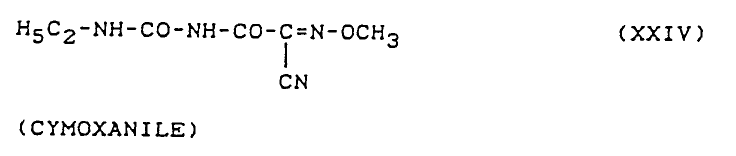 et/ou
(24) le composé de formule 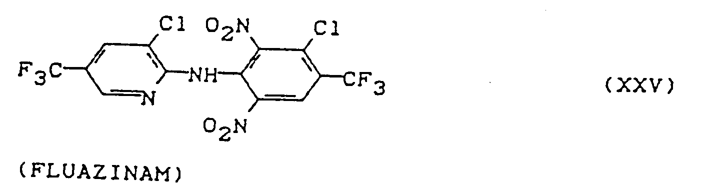 et/ou
(25) le composé de formule 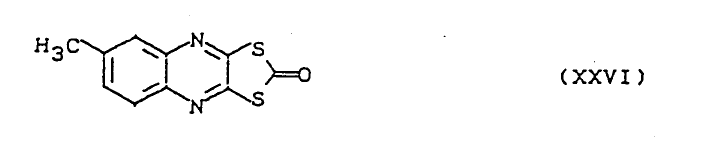 et/ou
(26) au moins l'un des composés de formule
Cl₃C-S-R¹⁴ (XXVII) 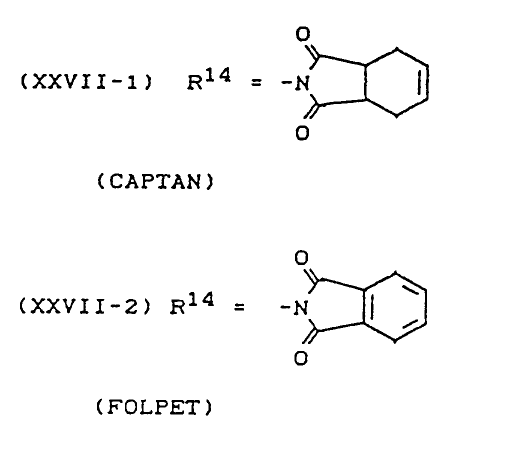
et/ou
(27) au moins un composé de formules
3 Cu(OH)₂.CuCl₂.x H₂O (XXVIII-1)
et 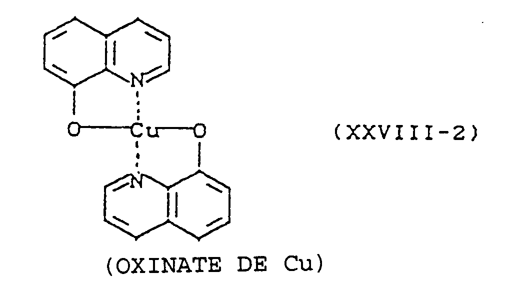 et/ou
(28) le composé de formule 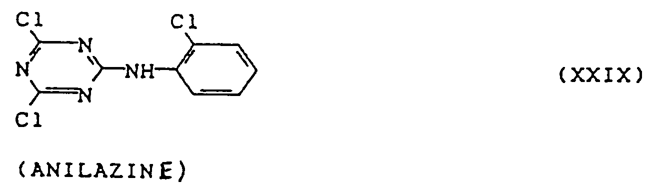 et/ou
(29) le composé de formule 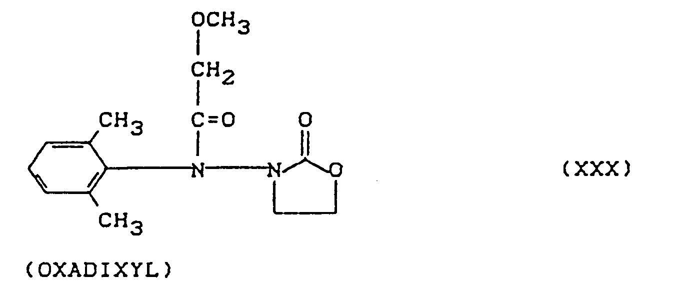 et/ou
(30) le composé de formule 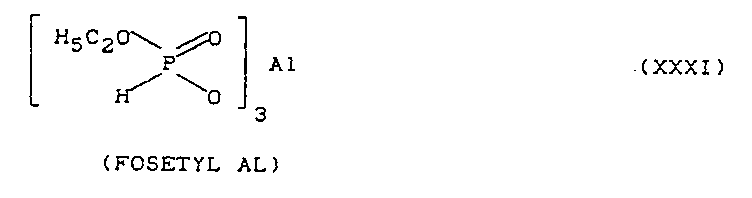 et/ou
(31) le composé de formule 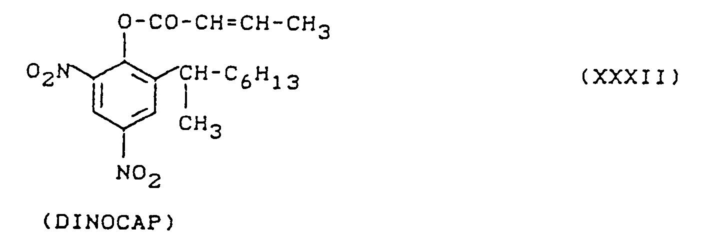 et/ou
(32) le composé de formule 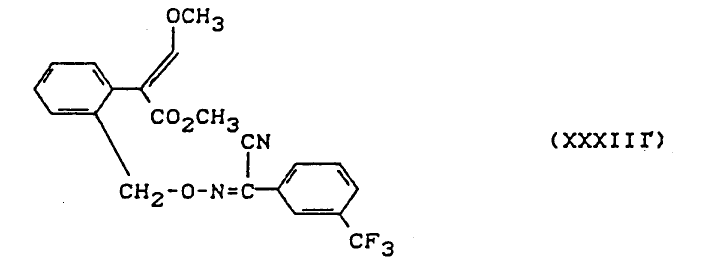 et/ou
(33) au moins un composé de formule 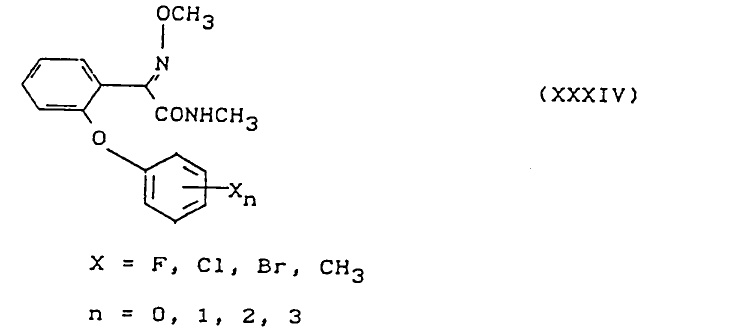 et/ou
(34) le composé de formule 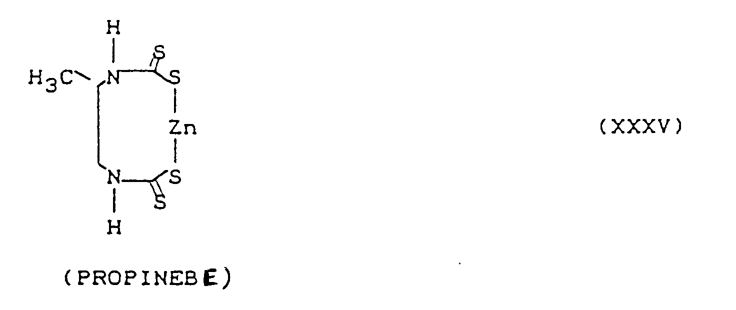 et/ou
(35) au moins un composé de formule 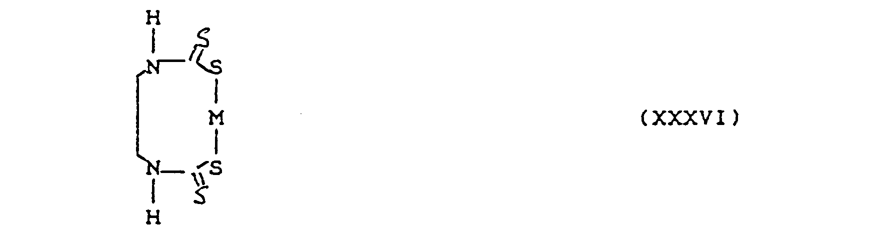 (XXXVI-1) M = Zn (ZINEBE)
(XXXVI-2) M = Mn (MANEBE)
(XXXVI-3) = mélange de (XXXVI-1) et (XXXVI-2) (MANCOZEBE)
et/ou
(36) au moins un composé de formule 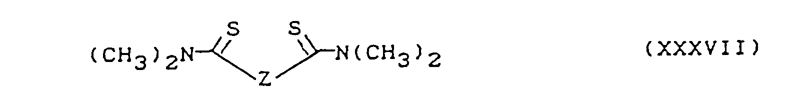 (XXXVII-1) Z = -S-S- (THIRAM)
(XXXVII-2) Z = -S-Zn-S- (ZIRAM)
et/ou
(37) le composé de formule 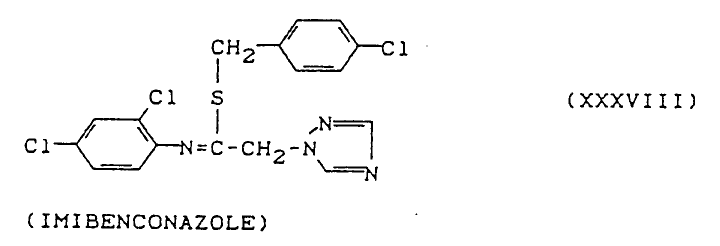 et/ou
(38) le composé de formule 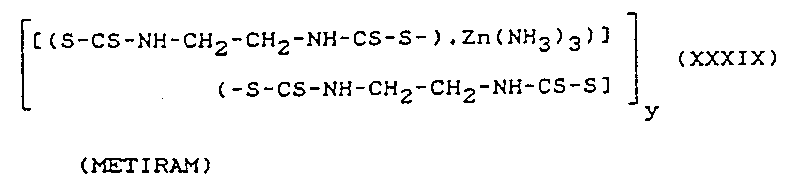 et/ou
(39) le composé de formule 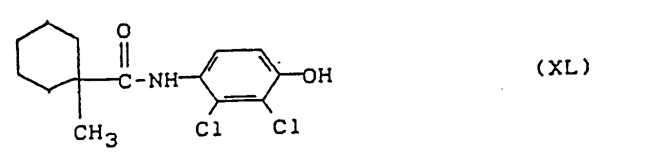 et/ou
(40) le composé de formule 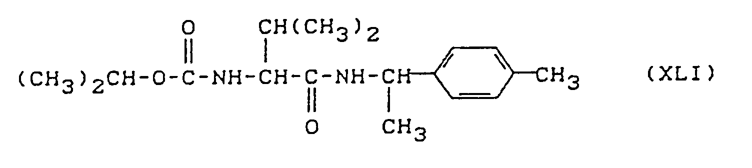 et/ou
(41) un composé de formule
Sₓ (XLII)
(SOUFRE MOUILLABLE)
et/ou
(42) au moins l'un des composés de formule 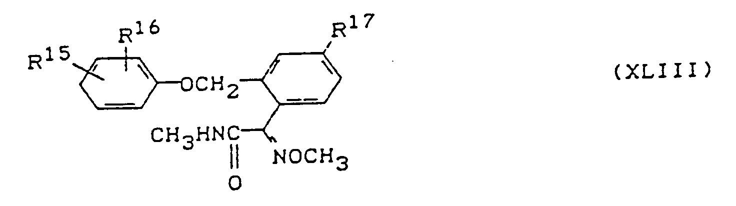 dans laquelle
R¹⁵ et R¹⁶ représentent, indépendamment l'un de l'autre, de l'hydrogène, un halogène, un groupe méthyle ou phényle et
R¹⁷ représente de l'hydrogène ou un groupe méthyle,
une proportion de 0,1 à 10 parties en poids d'au moins une substance active des groupes (1) à (42) correspondant à 1 partie en poids de substance active de formule (I) dans les associations de substances actives.

2. Procédé pour combattre des champignons, caractérisé en ce qu'on fait agir des associations de substances actives suivant la revendication 1 sur les champignons et/ou sur leur milieu.

3. Utilisation d'associations de substances actives suivant la revendication 1 pour combattre des champignons.

4. Procédé de préparation de compositions fongicides, caractérisé en ce qu'on mélange des associations de substances actives suivant la revendication 1 avec des diluants et/ou des agents tensio-actifs.
